# EUROPEAN PATENT APPLICATION

(11) **EP 1 935 738 A1**
(43) Date of publication of application: **25.06.2008**
(21) Application number: 07024833.1
(22) Date of filing: 20.12.2007
(51) Int. Cl.: B60W 30/06

(54) **Engine output adjustment system and vehicle including the same**

(30) Priority: 22.12.2006 JP 2006346020
(71) Applicant: Yamaha Hatsudoki Kabushiki Kaisha, Iwata-shi, Shizuoka-ken 438-8501 (JP)
(72) Inventor: Watanabe, Hiroto, Iwata-shi Shizuoka-ken 438-8501 (JP); Miura, Atsushi, Iwata-shi Shizuoka-ken 438-8501 (JP)
(74) Representative: Grünecker, Kinkeldey, Stockmair & Schwanhäusser Anwaltssozietät

(57) **Abstract**

A motorcycle includes an engine, a CPU, a clutch lever, and a shift switch. When a driver performs a shift operation, the CPU adjusts an output of the engine. When the CPU adjusts the output of the engine, the turning operation of the clutch lever is inhibited by the shift switch.

## Description

### BACKGROUND OF THE INVENTION

### 1. Field of the Invention

The present invention relates to an engine output adjustment system that assists a shift operation of a transmission and a vehicle including the same.

### 2. Description of the Related Art

When operating a gearshift in a vehicle with a manual transmission, first, a driver usually disconnects a clutch. Thus, power transmission from a crankshaft of an engine to a main shaft of the transmission is stopped, so that gears are easily disconnected. In this state, the driver performs a shift operation and changes gear positions. Finally, the driver connects the clutch, so that the power is transmitted from the crankshaft to the main shaft. In this way, the gearshift operation is completed.

During a race or other high speed activities, the gearshift is required to be operated quickly. Therefore, in some situations, the driver operates the gearshift without a clutch operation (hereinafter referred to as "clutchless shifting"). In such situations, since the gearshift is operated while the power is being transmitted from the crankshaft to the main shaft, it is difficult to disconnect the gears. Thus, the driver must adjust an output of the engine so that the gears can be easily disconnected.

The adjustment of the output of the engine, described above, is a difficult operation for a less skilled driver. Therefore, if the less skilled driver performs the clutchless shifting, in some cases, the gearshift cannot be performed smoothly.

Conventionally, a device that controls the output of the engine during the clutchless shifting has been developed (see JP 6-146941 A, for example).

In the engine output control device disclosed in JP 6-146941 A, when a driver performs a shift operation, the ignition timing of an engine is retarded by an ignition control device. This causes a driving force exerted between a gear on the output shaft side of a transmission and a gear on the input shaft side thereof to be reduced. As a result, the driver can perform a smooth shift operation.

Furthermore, the above-mentioned engine output control device is provided with a manual ON-OFF switch. The control of the ignition timing by the ignition control device can be inhibited by operating the ON-OFF switch. This makes it possible to choose whether or not the output of the engine is controlled depending on the situation.

When the clutch is disconnected while the output of the engine is adjusted by the ignition control device, a difference may, in some cases, arise between the numbers of revolutions of the crank shaft on the side of the engine and the main shaft on the side of the transmission. In this case, when the clutch is connected again, a shock is generated in a vehicle, so that a driving feeling may be negatively impacted.

In the above-mentioned structure of the engine output control device, the driver can easily operate a clutch lever while the output of the engine is adjusted by the ignition control device. Consequently, the driver may erroneously disconnect the clutch without noticing that the output of the engine is controlled by the ignition control device. In this case, a shock that is not expected by the driver is generated in the vehicle when the driver connects the clutch, so that the driving feeling of the vehicle is worsened.

### SUMMARY OF THE INVENTION

In order to overcome the problems described above, preferred embodiments of the present invention provide an engine output adjustment system that enables comfortable driving of a vehicle and a vehicle including the same.

According to a preferred embodiment of the present invention, an engine output adjustment system that adjusts an output of an engine in a vehicle that transmits a torque generated by the engine to a drive wheel through a clutch and a transmission includes an engine output adjuster that adjusts the output of the engine when a driver performs a shift operation of the transmission, and an inhibiting mechanism that inhibits the clutch from being disconnected by the driver when the output of the engine is adjusted by the engine output adjuster.

According to the engine output adjustment system, the output of the engine is adjusted when the driver performs the shift operation of the transmission. Thus, an engaging force of a gear on the input shaft side of the transmission with a gear on the output shaft side thereof is decreased, so that the gears can be easily moved away from each other. As a result, the driver can easily perform clutchless shifting.

When the output of the engine is adjusted by the engine output adjuster, the inhibiting mechanism inhibits the clutch from being disconnected by the driver. In this case, the clutch can be prevented from being disconnected by the driver while the output of the engine is adjusted by the engine output adjuster. This can prevent an unexpected shock from being generated in the vehicle during the shift operation. The results can prevent the driving feeling of the vehicle from being negatively impacted.

Furthermore, since the inhibiting mechanism inhibits the clutch from being disconnected, the driver can easily recognize that the output of the engine is adjusted by the engine output adjuster. Even when the driver tries to erroneously disconnect the clutch while the output of the engine is adjusted, the driver can immediately interrupt the operation. This can reliably prevent the driving feeling of the vehicle from being decreased.

The results described above enable comfortable driving of the vehicle.

The inhibiting mechanism may preferably inhibit the output of the engine from being adjusted by the engine output adjuster when the driver disconnects the clutch.

In this case, the output adjustment of the engine can be prevented from being performed by the engine output adjuster with the clutch disconnected. This can prevent an unexpected shock from being generated in the vehicle in the clutch connection. The results enable comfortable driving of the vehicle.

The inhibiting mechanism may either enable the engine output adjuster to adjust the output of the engine or enable the driver to disconnect the clutch.

In this case, it is possible to prevent the output adjustment of the engine by the engine output adjuster and the disconnection of the clutch by the driver from being simultaneously performed. This can reliably prevent an unexpected shock frombeing generated in the vehicle.

The engine output adjustment system may further include a switch mechanism operated by the driver, and the engine output adjuster may adjust the output of the engine when the switchmechanism is operated and the shift operation of the transmission is performed.

In this case, in order to adjust the output of the engine by the engine output adjuster, the driver must perform two operations, i.e., the operation of the switch mechanism and the shift operation. This can prevent the output of the engine from being adjusted by the engine output adjuster against the will of the driver.

The engine output adjustment system may further include a clutch operating member operated by the driver for operating the clutch, and the inhibiting mechanism may inhibit the clutch operating member from being operated by the driver when the driver operates the switch mechanism.

In this case, even when the driver tries to erroneously operate the clutch operating member with the output of the engine adjusted by the engine output adjuster, the clutch can be prevented from being disconnected. This can prevent the clutch from being disconnected while the output of the engine is adjusted by the engine output adjuster. Since the clutch operation is inhibited from being performed by the driver, the driver can immediately interrupt the operation. There results can more reliably prevent the driving feeling of the vehicle from being negatively impacted.

The inhibiting mechanism may inhibit the switch mechanism from being operated by the driver when the driver operates the clutch operating member.

In this case, even when the driver tries to erroneously operate the switchmechanism during the clutch operation, the switch mechanism can be prevented from being operated. This can prevent the output of the engine from being adjusted with the clutch disconnected. Since the switch mechanism is inhibited from being operated by the driver, the driver can immediately interrupt the operation. These results can sufficiently prevent the driving feeling of the vehicle from being worsened.

The inhibiting mechanismmay include the switch mechanism and the clutch operating member, the switch mechanism may include a first moving portion that moves in synchronization with the operation by the driver, the clutch operating member may include a second moving portion that moves in synchronization with the operation by the driver, the first moving portion may move to a position where the second moving portion is inhibited from moving when the driver operates the switch mechanism, and the second moving portion may move to a position where the first moving portion is inhibited from moving when the driver operates the clutch operating member.

In this case, when the driver operates the switch mechanism, the first moving portion in the switch mechanism inhibits the secondmoving portion in the clutch operatingmember frommoving. Even when the driver tries to erroneously operate the clutch operating member with the output of the engine adjusted by the engine output adjuster, therefore, the clutch can be prevented from being disconnected. This can prevent the clutch from being disconnected while the output of the engine is adjusted by the engine output adjuster. Since the clutch operation is inhibited from being performed by the driver, the driver can immediately interrupt the operation. These results can sufficiently prevent the driving feeling of the vehicle from being worsened.

Furthermore, when the driver operates the clutch operating member, the second moving portion in the clutch operating member inhibits the first moving portion in the switch mechanism from moving. Even when the driver tries to erroneously operate the switch mechanism during the clutch operation, therefore, the switch mechanism can be prevented from being operated. This can prevent the output of the engine from being adjusted with the clutch disconnected. Since the switch mechanism is inhibited from being operated by the driver, the driver can immediately interrupt the operation. These results can reliably prevent the driving feeling of the vehicle from being negatively impacted.

The inhibiting mechanism may include the switch mechanism and the clutch operating member, the switch mechanism may include a third moving portion that moves in a first direction in synchronization with the operation by the driver, the clutch operating member may include a fourth moving portion that moves in a second direction in synchronization with the operation by the driver, the third moving portion may urge the fourth moving portion in a direction opposite to the second direction when the driver operates the switch mechanism, and the fourth moving portion may urge the third moving portion in a direction opposite to the first direction when the driver operates the clutch operating member.

In the engine output adjustment system, the driver moves the third moving portion in the switch mechanism in the first direction when operating the switch mechanism. Further, the driver moves the fourth moving portion in the clutch operating member in the second direction when operating the clutch operating member.

Here, when the driver operates the switch mechanism, the third moving portion in the switch mechanism causes the fourth moving portion in the clutch operating member to be urged in the opposite direction to the second direction. Even when the driver tries to erroneously operate the clutch operating member with the output of the engine adjusted by the engine output adjuster, therefore, the driver can immediately interrupt the operation.

When the driver operates the clutch operating member, the fourth moving portion in the clutch operating member causes the third moving portion in the switch mechanism to be urged in the opposite direction to the first direction. Even when the driver tries to erroneously operate the switch mechanism during the clutch operation, therefore, the driver can immediately interrupt the operation.

The results described above can sufficiently prevent the driving feeling of the vehicle from being negatively impacted.

When the driver performs the shift operation of the transmission, the engine output adjuster may decrease the output of the engine when the torque is at least a first value in a driving state where it is transmitted from the engine to the transmission and may not decrease the output when the torque is less than the first value in the driving state.

In this case, when the torque is at least the first value when the driver performs the shift operation in the driving state, the output of the engine is decreased. Thus, the torque is transmitted between the input shaft and the output shaft of the transmission to be reduced, so that the engaging force of the gear on the input shaft side of the transmission with the gear on the output shaft side thereof is reduced. As a result, the gear on the input shaft side of the transmission and the gear on the output shaft side thereof can be easily moved away from each other, which enables the driver to easily perform the clutchless shifting.

Furthermore, when the torque is less than the first value in the driving state, the output of the engine is not decreased. Here, when the torque is less than the first value in the driving state, the torque transmitted between the input shaft and the output shaft of the transmission is small. In this case, no great engaging force is generated between the gear on the input shaft side of the transmission and the gear on the output shaft side thereof. Even if the output of the engine is not decreased, therefore, the driver can easily perform the clutchless shifting. In this case, the shock in the vehicle due to the decrease in the output of the engine is not generated. This prevents the driving feeling of the vehicle from being negatively impacted, which can prevent the driver from having an uncomfortable feeling.

The results described above enable comfortable driving of the vehicle.

According to another preferred embodiment of the present invention, a vehicle includes a drive wheel, an engine that generates a torque for rotating the drive wheel, a transmission that transmits the torque generated by the engine to the drive wheel, a clutch provided between the engine and the transmission, an engine output adjuster that adjusts the output of the engine when a driver performs a shift operation of the transmission, and an inhibiting mechanism that inhibits the clutch from being disconnected by the driver when the output of the engine is adjusted by the engine output adjuster.

In the vehicle, the torque generated by the engine can be transmitted to the drive wheel through the clutch and the transmission.

Furthermore, when the driver performs the shift operation of the transmission, the output of the engine is adjusted. Thus, an engaging force of a gear on the input shaft side of the transmission with a gear on the output shaft side thereof is decreased, so that the gears to be easily moved away from each other. As a result, the driver can easily perform clutchless shifting.

When the output of the engine is adjusted by the engine output adjuster, the inhibiting mechanism inhibits the clutch from being disconnected by the driver. In this case, the clutch can be prevented from being disconnected by the driver while the output of the engine is adjusted by the engine output adjuster. This can prevent a shock unexpected for the driver from being generated in the vehicle in the shift operation. As a result, the driving feeling of the vehicle can be prevented from being decreased.

Furthermore, since the inhibiting mechanism inhibits the clutch from being disconnected, the driver can easily recognize that the output of the engine is adjusted by the engine output adjuster. Even when the driver tries to erroneously disconnect the clutch while the output of the engine is adjusted, therefore, the driver can immediately interrupt the operation. As a result, the driving feeling of the vehicle can be reliably prevented from being negatively impacted.

The results described above enable comfortable driving of the vehicle.

Other features, elements, characteristics, and advantages of the present invention will become more apparent from the following description of preferred embodiments of the present invention with reference to the attached drawings.

### BRIEF DESCRIPTION OF THE DRAWINGS

Fig. 1 is a schematic side view of a motorcycle.

Fig. 2 is a diagram explaining structures of a transmission and a shift mechanism provided in the motorcycle of Fig. 1.

Figs. 3A and 3B are schematic diagrams showing a structure in which a torque is transmitted from a main shaft to a drive shaft.

Fig. 4 is a diagram showing a fixed grip, a clutch lever, and a shift switch, as viewed from the top.

Fig. 5 is a diagram showing the fixed grip, the clutch lever, and the shift switch, as viewed from the top.

Fig. 6 is a vertical sectional view taken along a line A - A of the shift switch shown in Fig. 4.

Fig. 7 is a diagram showing the fixed grip, the clutch lever, and the shift switch, as viewed from the top.

Fig. 8 is a diagram showing the fixed grip, the clutch lever, and the shift switch, as viewed from the top.

Fig. 9 is a diagram explaining a shift switch according to a preferred embodiment of the present invention.

Fig. 10 is a diagram explaining the shift switch according to a preferred embodiment of the present invention.

Fig. 11 is a diagram explaining the shift switch according to a preferred embodiment of the present invention.

Fig. 12 is a diagram explaining the shift switch according to a preferred embodiment of the present invention.

Fig. 13 is a diagram explaining the shift switch according to a preferred embodiment of the present invention.

Figs. 14A to 14C are diagrams showing a relationship between a dog of a sliding gear and a dog hole of a fixed gear.

Fig. 15 is a diagram showing a schematic structure of each element related to an engine and a control of an output of the engine.

Fig. 16 is a diagram showing an example of drive state determination data stored in a RAM of an ECU.

Figs. 17A to 17C are diagrams explaining a timing of an output adjustment of the engine by a CPU when a driver performs an up-shifting operation when the engine is in a driving state.

Figs. 18A to 18C are diagrams explaining a timing of the output adjustment of the engine by the CPU when the driver performs a down-shifting operation when the engine is in a driven state.

Fig. 19 is a diagram showing an example of a value detected by a shift cam rotation angle sensor when gear positions are changed between the first gear and the sixth gear.

Fig. 20 is a flowchart showing an example of a control operation of the CPU.

Fig. 21 is a flowchart showing an example of the control operation of the CPU.

Fig. 22 is a flowchart showing an example of the control operation of the CPU.

### DETAILED DESCRIPTION OF THE PREFERRED EMBODIMENTS

An engine output adjustment system and a vehicle including the same according to preferred embodiments of the present invention will now be described with reference to the drawings. Note that a motorcycle as an example of the vehicle will be described below.

### First Preferred Embodiment

### General Structure of Motorcycle

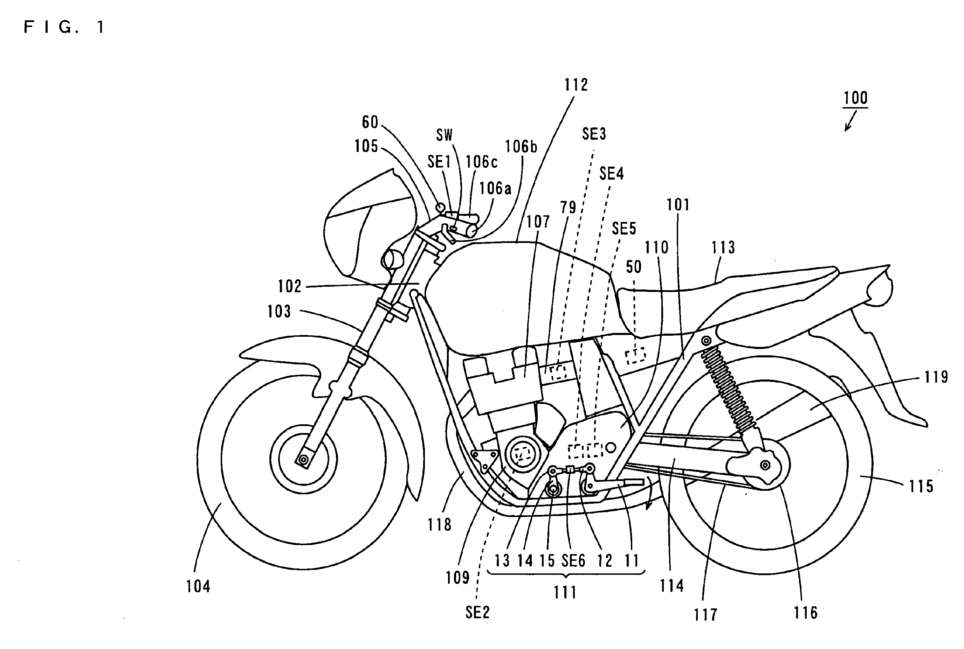

Fig. 1 is a schematic side view of a motorcycle to which an engine output adjustment system according to the first preferred embodiment is preferably applied.

In the motorcycle 100 of Fig. 1, a head pipe 102 is provided at the front end of a main body frame 101. A front fork 103 is pivotably provided at the head pipe 102. At the lower end of the front fork 103, a front wheel 104 is rotatably supported. A handle 105 is provided at the upper end of the head pipe 102.

The handle 105 is provided with a fixed grip 106a, a clutch lever 106b, an accelerator grip 106c, a brake lever (not shown), an accelerator opening sensor SE1 and a notification lamp 60. A shift switch SW is provided between the fixed grip 106a and the clutch lever 106b.

The shift switch SW outputs a signal representing an ON state (hereinafter referred to as a shift signal) when it is turned on by a driver. Details of the shift switch SW will be described later. The accelerator opening sensor SE1 detects an operation amount of the accelerator grip 106c by the driver (hereinafter referred to as "an accelerator opening"). The notification lamp 60 will be described later.

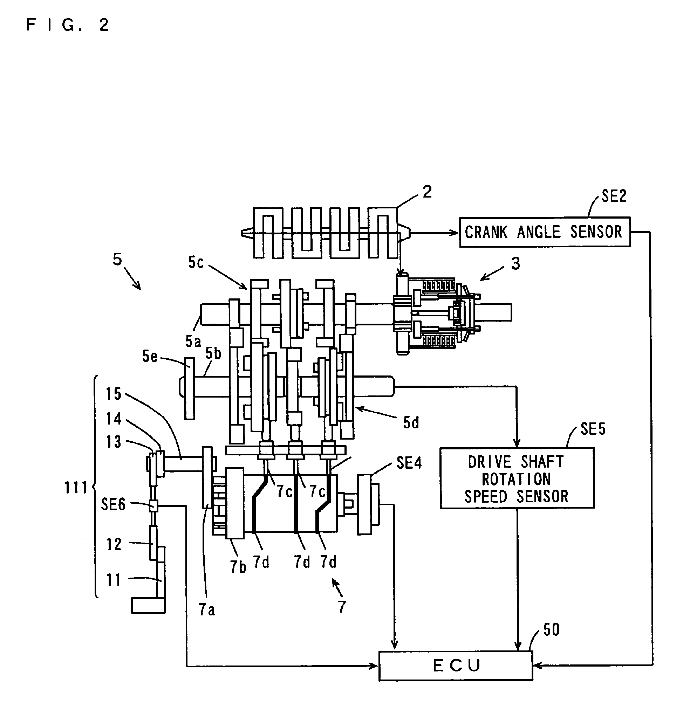

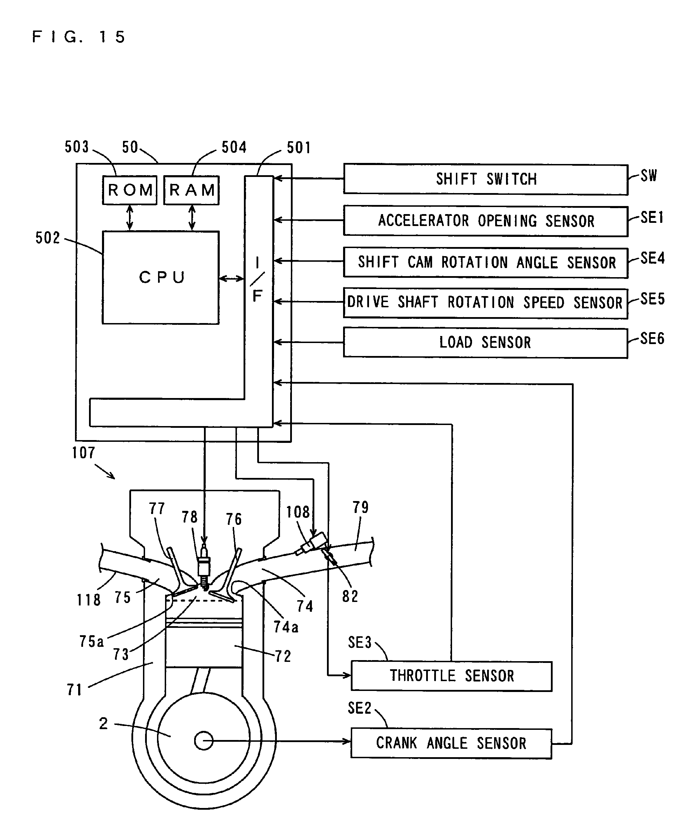

An engine 107 is provided at the center of the body frame 101. An intake pipe 79 and an exhaust pipe 118 are attached to the engine 107. A crankcase 109 is attached to the lower portion of the engine 107. A crank angle sensor SE2 is provided in the crankcase 109. The crank angle sensor SE2 detects the rotation angle of a crank 2, described later (see Fig. 2 and Fig. 15), of the engine 107.

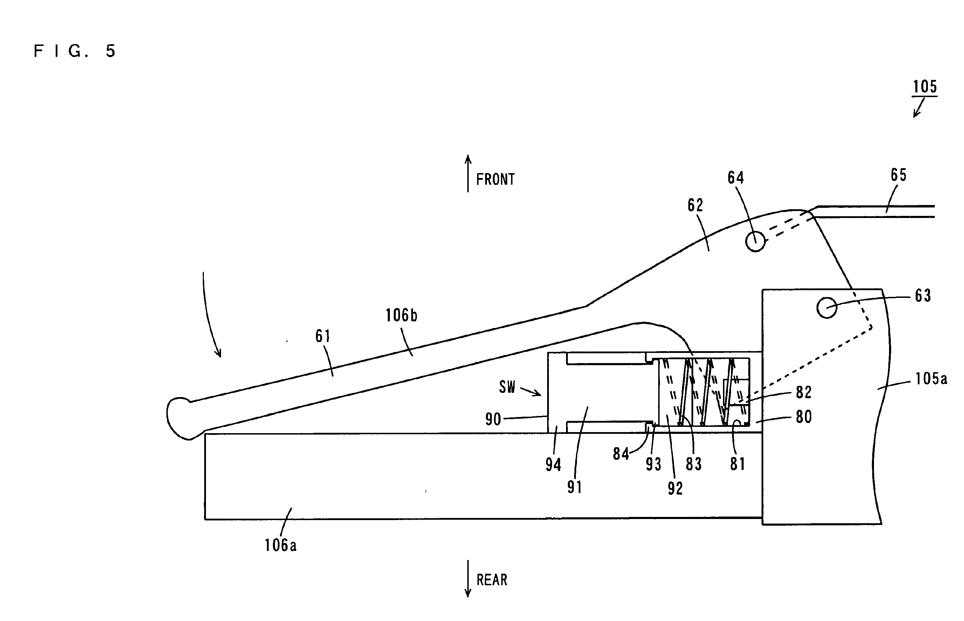

A throttle sensor SE3 is provided in the intake pipe 79. The throttle sensor SE3 detects the opening of an electronically controlled throttle valve (ETV) 82 (see Fig. 5), described later.

A transmission case 110 coupled to the crankcase 109 is provided at the lower portion of the body frame 101. A shift cam rotation angle sensor SE4, a drive shaft rotation speed sensor SE5 as well as a transmission 5 (see Fig. 2) and a shift mechanism 7 (see Fig. 2), described later, are provided in the transmission case 110.

The shift cam rotation angle sensor SE4 detects the rotation angle of a shift cam 7b (see Fig. 2), described later. The drive shaft rotation speed sensor SE5 detects the rotation speed of a drive shaft 5b (see Fig. 2), described later. Details of the transmission 5 and the shift mechanism 7 will be described later.

A transmission operating mechanism 111 is provided on the side portion of the transmission case 110. The transmission operating mechanism 111 includes a shift pedal 11, a first coupling arm 12, a load sensor SE6, a second coupling arm 13, a pivot arm 14 and a pivot shaft 15. One end of the pivot shaft 15 is fixed to the pivot arm 14, and the other end thereof is coupled to the shift mechanism 7 (see Fig. 2), described later.

For example, when up-shifting the transmission 5, the driver depresses the shift pedal 11 to turn it in a clockwise direction (the direction indicated by the arrow in Fig. 1). Accordingly, the first and second coupling arms 12, 13 move towards the back of the motorcycle 100, and the pivot arm 14 and the pivot shaft 15 turn in the clockwise direction. As a result, the shift mechanism 7 is operated, so that the transmission 5 is shifted up. Note that the shift pedal 11 is turned in a counterclockwise direction to shift down the transmission 5. Thus, the pivot shaft 15 is turned in the direction opposite to the direction described above (the counterclockwise direction). As a result, the shift mechanism 7 is operated, so that the transmission 5 is shifted down.

The load sensor SE6 preferably includes a load cell such as an elastic load cell (a strain gauge type, an electrostatic capacitance type or the like) or a magnetostrictive load cell, for example, and detects a tensile load and a compressive load acting on the load sensor SE6. When the driver turns the shift pedal 11 in the clockwise direction (an up-shifting operation), the tensile load acts on the load sensor SE6. When the driver turns the shift pedal 11 in the counterclockwise direction (a down-shifting operation), the compressive load acts on the load sensor SE6.

A fuel tank 112 is provided above the engine 107 and a seat 113 is provided in the rear of the fuel tank 112. An ECU (Electronic Control Unit) 50 is provided under the seat 113.

As shown in Fig. 15, the ECU 50 includes an I/F (interface) 501, a CPU (central processing unit) 502, a ROM (read only memory) 503 and a RAM (random access memory) 504. The shift signal of the shift switch SW and values detected by the above sensors SE1-SE6 are applied to the CPU 502 via the I/F 501.

The CPU 502 controls the operation of the engine 107 based on the shift signal of the shift switch SW and the values detected by the respective sensors SE1-SE6, as described later. The ROM 503 stores a control program for the CPU 502. The RAM 504 functions as a work area for the CPU 502 while storing a first to sixth threshold values and the like, described later.

A rear arm 114 is connected to the body frame 101 so as to extend to the rear of the engine 107. A rear wheel 115 and a rear wheel driven sprocket 116 are rotatably held by the rear arm 114. A chain 117 is attached to the rear wheel driven sprocket 116.

One end of an exhaust pipe 118 is attached to an exhaust port of the engine 107. The other end of the exhaust pipe 118 is attached to a muffler 119.

### Transmission Mechanism

Fig. 2 is a diagram explaining the structures of the transmission and the shift mechanism provided in the transmission case 110 of Fig. 1.

As shown in Fig. 2, the transmission 5 includes a main shaft 5a and the drive shaft 5b. A plurality of transmission gears 5c are mounted on the main shaft 5a, and a plurality of transmission gears 5d and a rear wheel drive sprocket 5e are mounted on the drive shaft 5b. The chain 117 of Fig. 1 is attached to the rear wheel drive sprocket 5e.

The torque (driving force) generated by the engine 107 of Fig. 1 is transmitted to a clutch 3 through the crank 2 of Fig. 2. The torque is further transmitted from the clutch 3 to the main shaft 5a of the transmission 5. The torque is further transmitted from the main shaft 5a to the drive shaft 5b through the transmission gears 5c, 5d. The torque is further transmitted from the drive shaft 5b to the rear wheel 115 (Fig. 1) through the rear wheel drive sprocket 5e, the chain 117 (Fig. 1) and the rear wheel driven sprocket 116 (Fig. 1). Accordingly, the rear wheel 115 is rotated.

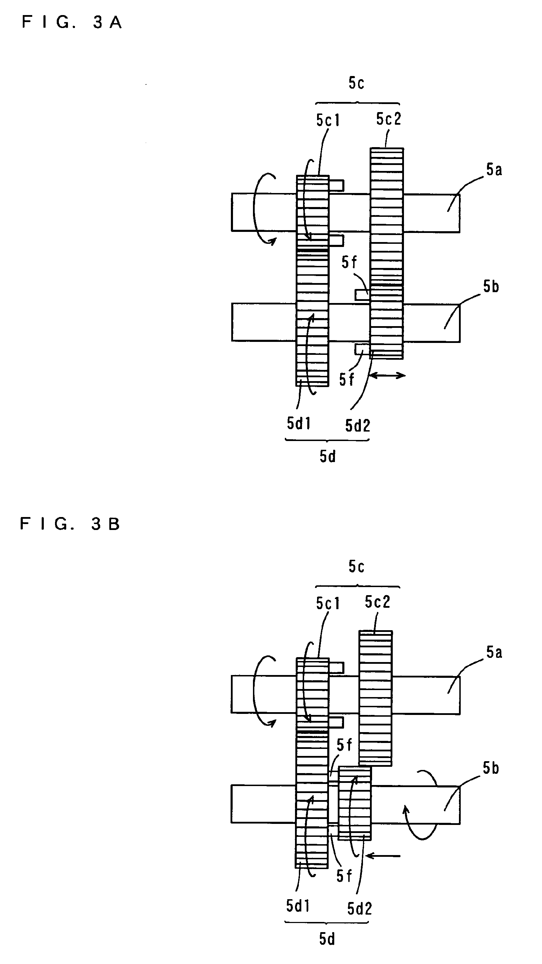

Figs. 3A and 3B are schematic diagrams showing the structure in which the torque is transmitted from the main shaft 5a to the drive shaft 5b.

Note that transmission gears 5c1 and 5c2 of the plurality of transmission gears 5c and transmission gears 5d1 and 5d2 of the plurality of transmission gears 5d are shown in Figs. 3A and 3B.

The transmission gear 5c1 is mounted on the main shaft 5a in a serration structure. That is, the transmission gear 5c1 is movable in the axial direction of the main shaft 5a, while being fixed to the main shaft 5a in the rotational direction of the main shaft 5a. Therefore, the rotation of the main shaft 5a causes the transmission gear 5c1 to rotate. The transmission gear 5c2 is rotatably mounted on the main shaft 5a while being inhibited from moving in the axial direction of the main shaft 5a.

The transmission gear 5d1 is rotatably mounted on the drive shaft 5b while being inhibited from moving in the axial direction of the drive shaft 5b. When the transmission gear 5c1 and the transmission gear 5d1 are engaged with each other, the rotation of the main shaft 5a causes the transmission gear 5d1 to rotate as shown in Fig. 3A.

The transmission gear 5d2 is mounted on the drive shaft 5b in the serration structure. That is, the transmission gear 5d2 is movable in the axial direction of the drive shaft 5b while being fixed to the drive shaft 5b in the rotational direction of the drive shaft 5b. Therefore, the rotation of the transmission gear 5d2 causes the drive shaft 5b to rotate.

As shown in Fig. 3A, when the transmission gear 5d2 is spaced apart from the transmission gear 5d1, the transmission gear 5d1 is not fixed to the drive shaft 5b in the rotational direction of the drive shaft 5b. In this case, the rotation of the main shaft 5a causes the transmission gear 5d1 to rotate, but does not cause the drive shaft 5b to rotate. This state where the torque (driving force) is not transmitted from the main shaft 5a to the drive shaft 5b is referred to as the state where the gears are in neutral positions.

As shown in Fig. 3B, the transmission gear 5d2 moves in the axial direction to be proximate to the transmission gear 5d1, so that convex-shaped dogs 5f provided on a side surface of the transmission gear 5d2 engage with concave-shaped dog holes provided on a side surface of the transmission gear 5d1 (not shown). In this way, the transmission gears 5d1 and 5d2 are fixed to each other. In this case, the rotation of the main shaft 5a causes the transmission gear 5d2 to rotate together with the transmission gear 5d1. Accordingly, the drive shaft 5b is rotated.

Note that when the transmission gear 5c1 in the state of Fig. 3A is moved to the proximity of the transmission gear 5c2 to be fixed to the transmission gear 5c2, the transmission gear 5c2 rotates with the transmission gear 5c1. In this case, the transmission gear 5d2 is rotated in accordance with the rotation of the transmission gear 5c2. Thus, the drive shaft 5b is rotated. Hereinafter, transmission gears, such as the transmission gears 5c1, 5d2, which move in the axial direction on the main shaft 5a or the drive shaft 5b will be referred to as sliding gears. In addition, transmission gears, such as the transmission gears 5c2, 5d1, which are inhibited from moving in the axial direction of the main shaft 5a or the drive shaft 5b will be referred to as fixed gears.

In the transmission 5, a transmission path of the torque (driving force) from the main shaft 5a to the drive shaft 5b can be changed by moving the sliding gears to change the combination of the sliding gears and the fixed gears, as described above. Thus, the rotational speed of the drive shaft 5b can be changed. Note that the sliding gears are moved by a shift arm 7a, described later.

As shown in Fig. 2, the shift mechanism 7 includes the shift arm 7a, the shift cam 7b and a plurality of shift forks 7c. One end of the shift arm 7a is fixed to the pivot shaft 15 and the other end is coupled to one end of the shift cam 7b. A plurality of cam grooves 7d are formed in the shift cam 7b. The plurality of shift forks 7c are attached to the plurality of cam grooves 7d, respectively. The shift cam rotation angle sensor SE4 is provided at the other end of the shift cam 7b.

As described above, when the driver turns the shift pedal 11, the pivot shaft 15 is turned accordingly. With the pivot shaft 15 turned, the shift arm 7a is turned at one end as a central axis. This causes the shift cam 7b to turn.The turn of the shift cam 7b causes the shift forks 7c to move along the cam grooves 7d, respectively. Accordingly, the sliding gears are moved, so that the transmission path of the torque (driving force) from the main shaft 5a to the drive shaft 5b is changed. That is, a gear ratio of the transmission 5 is changed.

### Shift Switch

When the driver operates the shift pedal 11 (Fig. 1) with the shift switch SW (Fig. 1) turned on (hereinafter referred to as a shift operation), the CPU 502 adjusts the output of the engine (see Fig. 15). Thus, the driver can easily perform clutchless shifting.

Here, in the present preferred embodiment, the driver cannot perform a clutch operation with the shift switch SW turned on. This prevents the clutch 3 from being disconnected while the output of the engine 107 is adjusted by the CPU 502. As a result, a great shock can be prevented frombeing generated in the motorcycle 100 during the shift operation. Description is now made of the structure of the shift switch SW using the drawings.

First, the positional relationship among the fixed grip 106a, the clutch lever 106b, and the shift switch SW will be described.

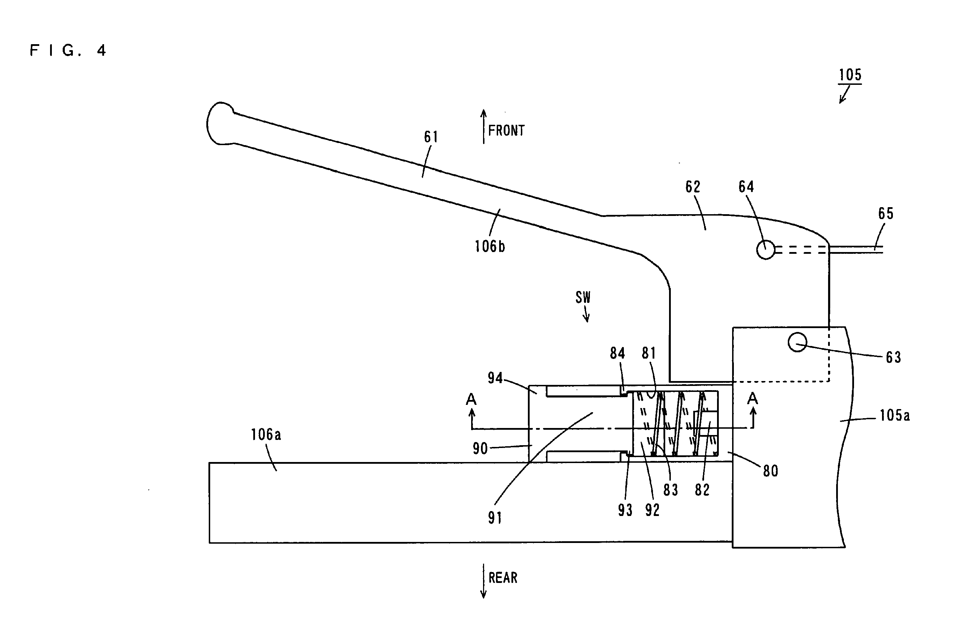

Figs. 4 and 5 are diagrams showing the fixed grip 106a, the clutch lever 106b, and the shift switch SW, as viewed from the top. Fig. 4 illustrates a state in a normal operation (a state where the clutch lever 106b and the shift switch SW are not operated), and Fig. 5 illustrates a state where the driver is performing the clutch operation without operating the shift switch SW.

As shown in Fig. 4, the shift switch SW is fixed to a main body 105a in the handle 105. The fixed grip 106a is fixed to the main body 105a. The clutch lever 106b includes a bar 61 and a substantially square wide portion 62. The wide portion 62 is pivotably attached to the main body 105a with a connecting pin 63. One end of a clutch wire 65 is connected to the wide portion 62 with a fixed pin 64. The other end of the clutch wire 65 is connected to the clutch 3 (Fig. 2).

As shown in Fig. 5, the driver grasps the bar 61 with his/her hand put on the fixed grip 106a so that the clutch lever 106b is turned around the connecting pin 63. Thus, the clutch wire 65 is pulled, so that the clutch 3 is disconnected.

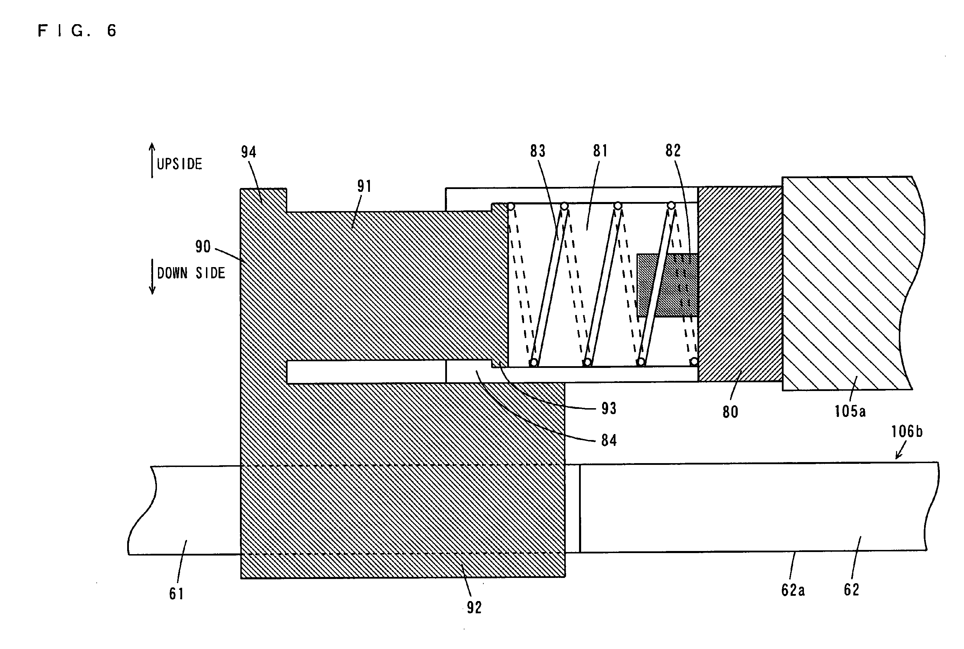

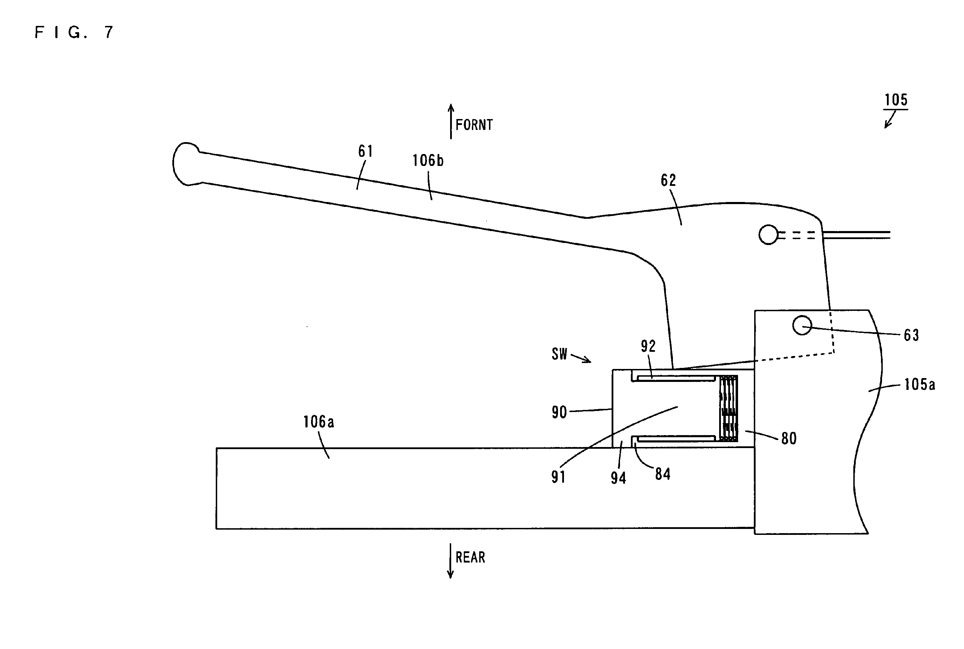

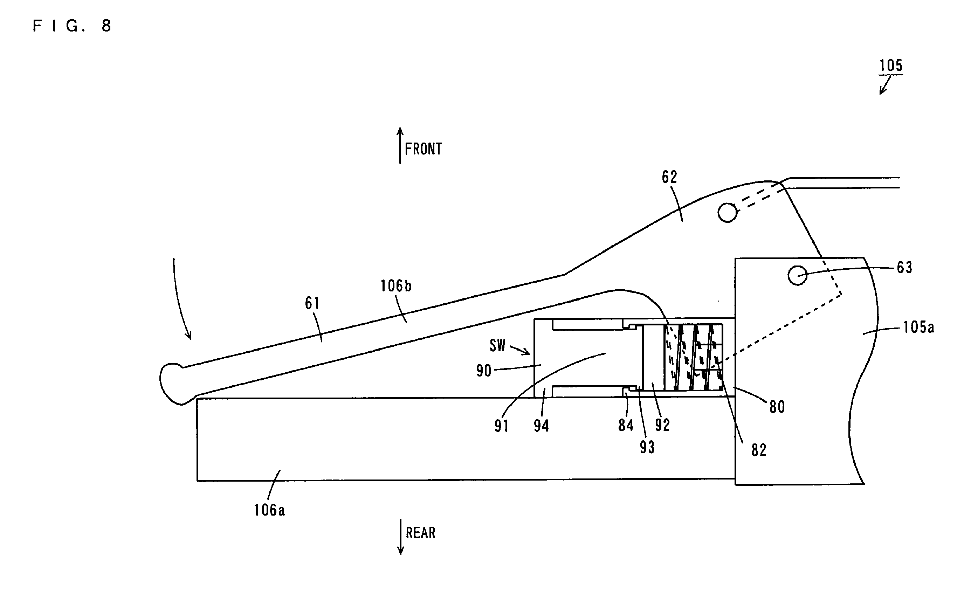

The structure of the shift switch SW will be then described. Fig. 6 is a vertical sectional view taken along a line A - A of the shift switch SW shown in Fig. 4. Figs. 7 and 8 are diagrams showing the fixed grip 106a, the clutch lever 106b, and the shift switch SW, as viewed from the top.

As shown in Figs. 4 to 6, a space 81 is formed within a fixed member 80. The fixed member 80 is provided with a button 82 which is placed at one end of the space 81. The shift switch SW outputs a shift signal when the button 82 is pressed.

A spring 83 is provided within the space 81. One end of the spring 83 is fixed to the fixed member 80 at one end of the space 81. One end of the fixed member 80 is buried in the main body 105a. A flange-shaped engagement portion 84 is provided at the other end of the fixed member 80.

As shown in Fig. 6, a moving member 90 includes a button pressing portion 91 and a supporting portion 92. A flange-shaped engagement portion 93 is formed at one end of the button pressing portion 91, and a flange-shaped engagement portion 94 is formed at the other end thereof. One end of the button pressing portion 91 is slidably fitted in the space 81. The other end of the spring 83 is abutted against the one end of the button pressing portion 91. Thus, the button pressing portion 91 is urged in a direction away from the button 82 by the spring 83. The clutch lever 106b is arranged such that a lower end 62a of the wide portion 62 is lower than a lower end of the fixed member 80 and higher than a lower end of the supporting portion 92.

As shown in Figs. 4 and 6, the button pressing portion 91 is forced out to a position where the engagement portion 93 is engaged with the engagement portion 84 in the fixed member 80 by the spring 83 in a normal operation. In this case, the button 82 is not pressed by the button pressing portion 91, so that no shift signal is outputted from the shift switch SW.

As shown in Fig. 7, when the driver presses the button pressing portion 91, the button pressing portion 91 is forced into a position where the engagement portion 94 is abutted against the engagement portion 84 in the fixed member 80. Thus, the button 82 (see Fig. 4) is pressed by the button pressing portion 91, so that a shift signal is outputted from the shift switch SW.

Here, as shown in Fig. 7, when the button 82 is pressed by the button pressing portion 91, the turning operation of the clutch lever 106b is inhibited by the supporting portion 92 in the present preferred embodiment. Specifically, with the wide portion 62 abutted against a side surface of the supporting portion 92, the turn of the clutch lever 106b is inhibited. When the output of the engine 107 is adjusted by the CPU 502 (see Fig. 15), therefore, the driver cannot disconnect the clutch 3 in the present preferred embodiment.

As shown in Fig. 8, when the driver is performing the clutch operation, the button 82 is inhibited from being pressed by the button pressing portion 91. Specifically, with the supporting portion 92 abutted against the wide portion 62, the button pressing portion 91 is inhibited from moving. When the driver is performing the clutch operation, therefore, the output of the engine 107 is not adjusted by the CPU 502 in the present

### preferred embodiment.

The output adjustment of the engine 107 by the CPU 502 will be described later.

### Effects

As described above, in the present preferred embodiment, the driver cannot disconnect the clutch 3 when the output of the engine 107 is adjusted by the CPU 502. This can prevent a shock that is not expected by the driver from being generated in the motorcycle 100 in the shift operation. The results described above enable comfortable driving of the motorcycle 100.

When the driver disconnects the clutch 3, the driver cannot turn the shift switch SW on. This can prevent the driver from erroneously turning on the shift switch SW while performing the clutch operation. In this case, the output adjustment of the engine 7 by the CPU 502 can be prevented from being performed with the clutch 3 disconnected. This can prevent an unexpected shock from being generated in the motorcycle 100 when the driver connects the clutch 3. The results enable comfortable driving of the motorcycle 100.

Furthermore, in the present preferred embodiment, the turn of the clutch lever 106b is inhibited by the shift switch SW with the output of the engine 107 adjusted by the CPU 502. Thus, the driver can easily recognize that the output adjustment of the engine 107 is performed by the CPU 502. When the driver tries to erroneously operate the clutch lever 106b, therefore, the operation can be immediately interrupted.

Furthermore, with the clutch lever 106b operated by the driver, the press of the shift switch SW is inhibited by the clutch lever 106b. When the driver tries to erroneously press the shift switch SW, therefore, the operation can be immediately interrupted. Second Preferred Embodiment

Amotorcycle according to the second preferred embodiment differs from the motorcycle 100 according to the first preferred embodiment in the following points.

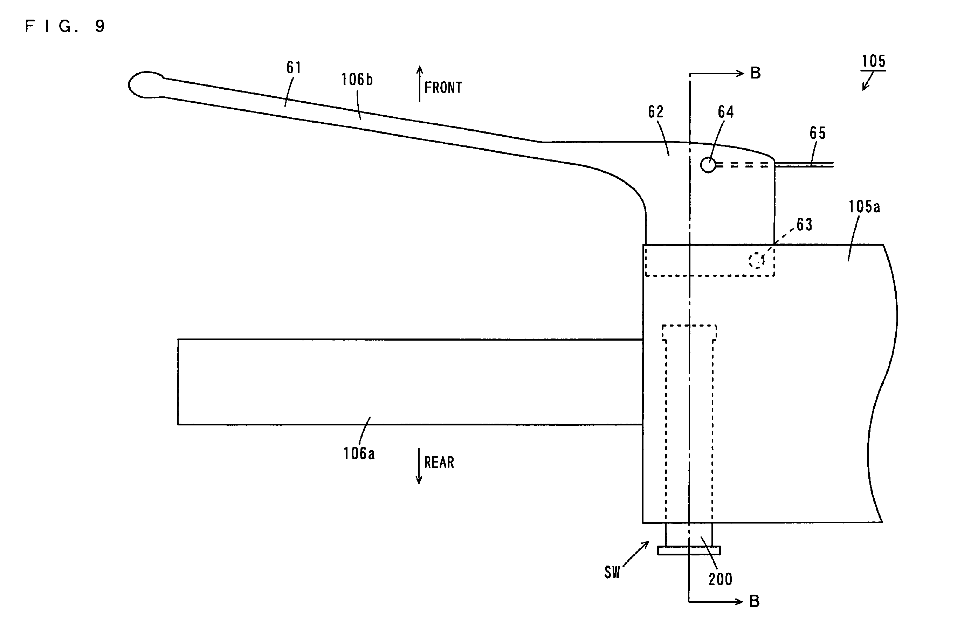

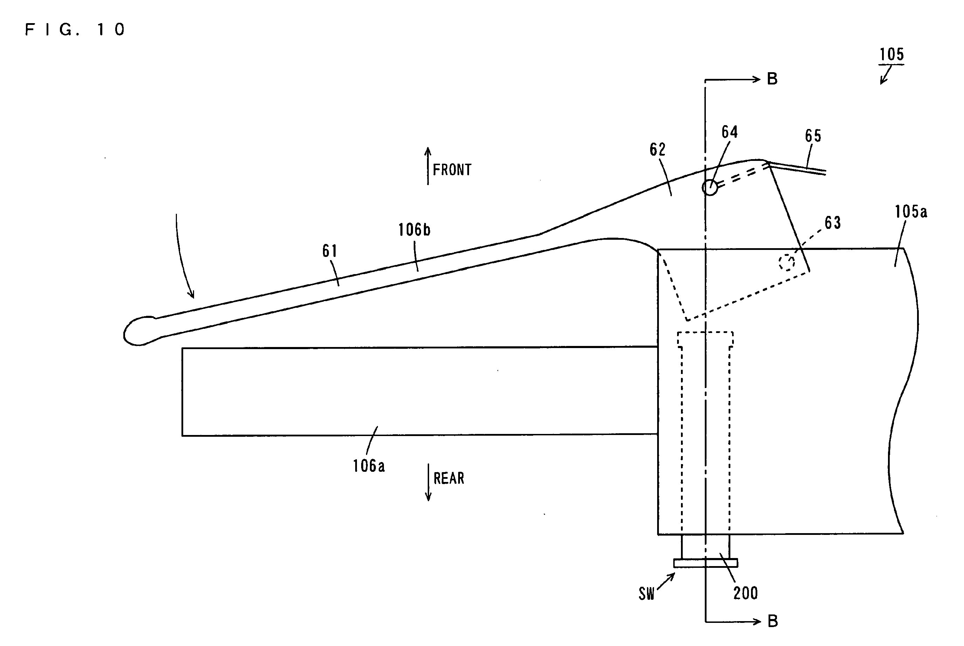

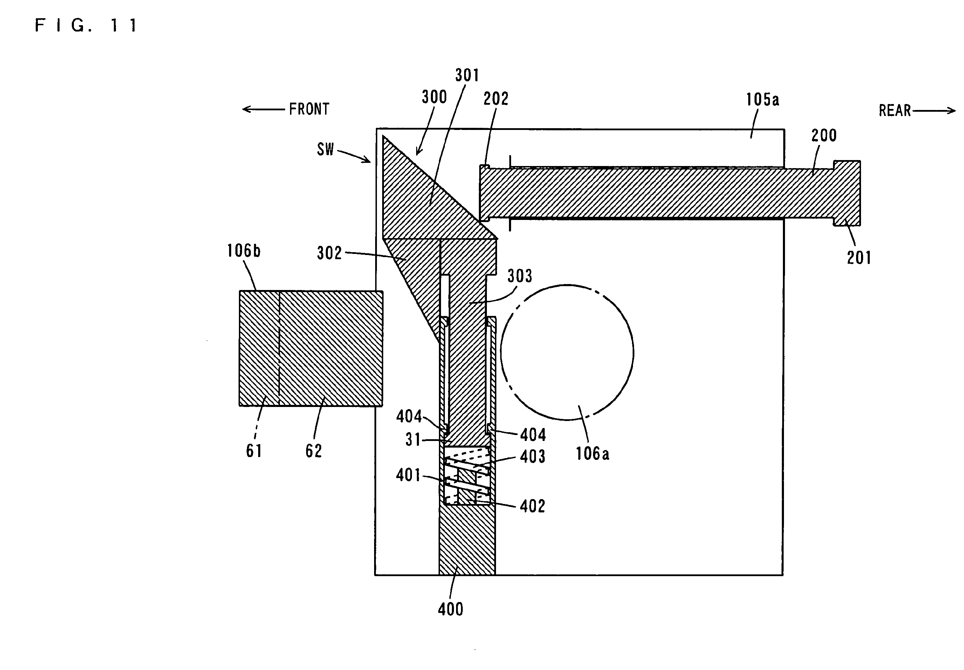

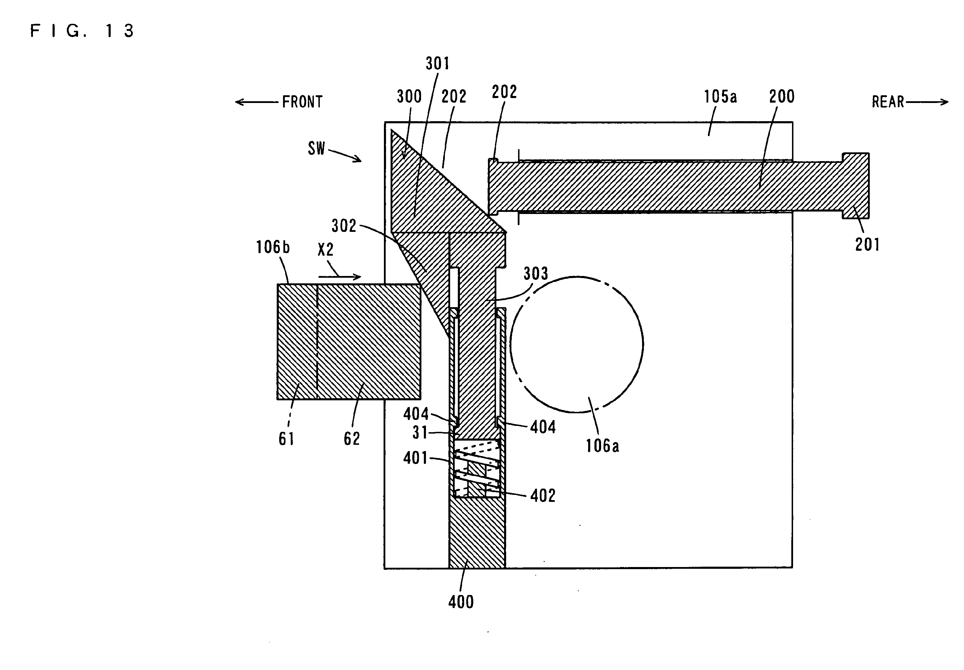

Figs. 9 to 13 are diagrams for explaining a shift switch SW according to the second preferred embodiment. Figs. 9 and 10 are diagrams showing a fixed grip 106a, a clutch lever 106b, and a shift switch SW, as viewed from the top. Figs. 11 and 13 are vertical sectional views taken along a line B - B of the fixed grip 106a, the clutch lever 106b, and the shift switch SW shown in Figs. 9 and 10.

As shown in Fig. 9, in the present preferred embodiment, a wide portion 62 of the clutch lever 106b is pivotably attached to a main body 105a through a connecting pin 63 at a corner farthest apart from a bar 61. The rear of the wide portion 62 is accommodated within the main body 105a.

As shown in Fig. 10, a driver grasps the bar 61 with his/her hand put on the fixed grip 106a, so that the clutch lever 106b is turned within a horizontal plane around the connecting pin 63 while causing the wide portion 62 to enter the main body 105a. Thus, a clutch wire 65 is pulled, so that the clutch 3 is disconnected.

As shown in Figs. 11 to 13, the shift switch SW includes a bar-shaped pressed member 200, an idle member 300, and a fixed member 400 in the present preferred embodiment.

As shown in Figs. 9 to 13, the pressed member 200 is inserted into the main body 105a from a rear surface of the main body 105a on the side opposite to the wide portion 62 of the clutch lever 106b toward the wide portion 62. The pressed member 200 is arranged to be movable back and forth within the main body 105a. A flange 201 is provided at a rear end of the pressed member 200, and a flange 202 is provided at a front end thereof.

As shown in Figs. 11 to 13, the idle member 300 includes a first pressed member 301 having a right-angled triangular shape in cross section, a second pressed member 302 having a right-angled triangular shape in cross section, and a bar-shaped pressed member 303. A flange-shaped engagement portion 31 is formed at a lower end of the pressed member 303.

The first pressed member 301 is arranged such that its inclined surface faces a tip portion of the pressed member 200 and its lower surface is horizontal. In order that an inclined surface of the second pressed member 302 faces the wide portion 62 of the clutch lever 106b, the other surface of the second pressed member 302 is fixed to the lower surface of the first pressed member 301. Further, an upper end of the pressed member 303 is fixed to the lower surface of the first pressed member 301.

The fixed member 400 is fixed to the main body 105a so as to extend in a vertical direction. A cylinder 401 is provided at an upper end of the fixed member 400. In the cylinder 401, a button 402 is provided at a substantially central portion of the bottom thereof. The shift switch SW outputs a shift signal when the button 402 is pressed.

In the cylinder 401, a lower end of a spring 403 is fixed to the bottom thereof. An annular engagement portion 404 is formed at a substantially central portion of an inner peripheral surface of the cylinder 401. A lower portion of the pressed member 303 is slidably inserted in the vertical direction into the cylinder 401. This enables the idle member 300 to move in the vertical direction, while inhibiting the idle member 300 from moving in a horizontal direction. An upper end of the spring 403 is abutted against a lower end of the pressed member 303. Thus, the pressed member 303 is urged in a direction away from the button 402 by the spring 403.

As shown in Fig. 11, the pressed member 303 is pressed up to a position where the engagement portion 31 is engaged with the engagement portion 404 in the fixed member 400 by the spring 403 in a normal operation. In this case, the button 402 is not pressed by the pressed member 303, so that no shift signal is outputted from the shift switch SW.

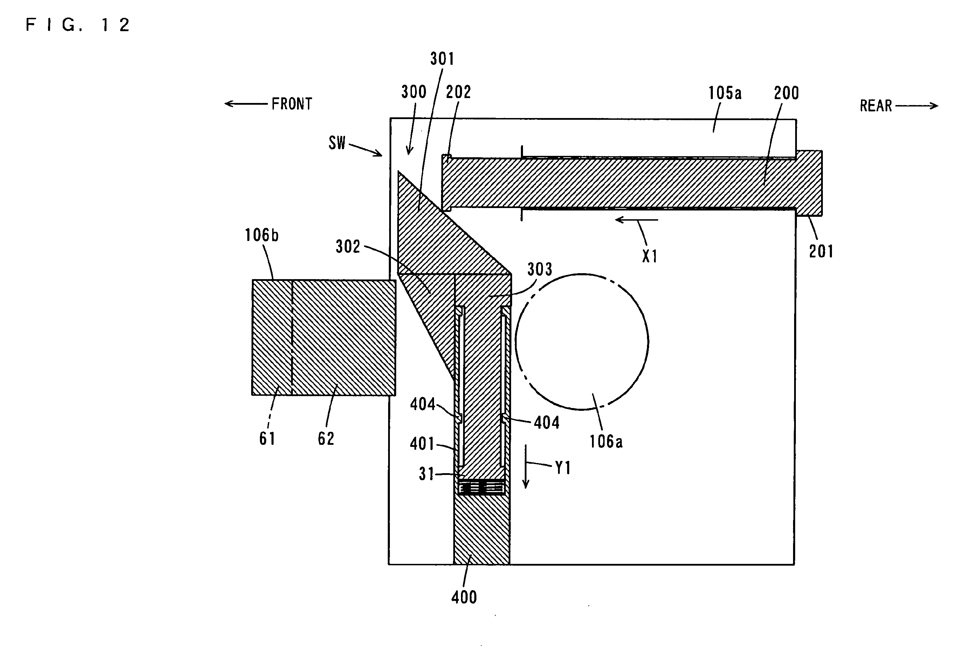

When the driver presses the flange 201 at the rear end of the pressed member 200 forward, as indicated by an arrow X1 in Fig. 12, the inclined surface of the first pressed member 301 in the idle member 300 is pressed by the flange 202 at the front end. The idle member 300 is pressed by the flange 201 to move vertically downward because it cannot move in the horizontal direction. Thus, the lower end of the pressed member 303 is forced into the vicinity of the inner bottom of the cylinder 401 in the fixed member 400, as indicated by an arrow Y1. As a result, the button 402 (see Fig. 11) is pressed by the flange 31, so that a shift signal is outputted from the shift switch SW.

Furthermore, when the driver performs a clutch operation, as indicated by an arrow X2 in Fig. 13, the inclined surface of the second pressed member 302 is pressed by the wide portion 62 of the clutch lever 106b. The idle member 300 is pressed by the wide portion 62 to move vertically upward because it cannot be moved in the horizontal direction. Thus, the pressed member 303 is pressed upward to the position where the engagement portion 31 is engaged with the engagement portion 404 in the fixed member 400. In this case, the button 402 is not pressed by the pressed member 303, so that no shift signal is outputted from the shift switch SW.

Here, in the present preferred embodiment, the turning operation of the clutch lever 106b is inhibited by the second pressed member 302 with the pressed member 200 pressed forward by the driver, as shown in Fig. 12. Specifically, with the wide portion 62 abutted against the inclined surface of the second pressed member 302, the turn of the clutch lever 106b is inhibited.

Therefore, in the present preferred embodiment, the clutch 3 is inhibited from being disconnected with the output of the engine 107 adjusted by the CPU 502 (see Fig. 15). This can prevent a shock that is not expected by the driver from being generated in the motorcycle 100 in the shift operation. The results enable comfortable driving of the motorcycle 100.

Furthermore, as shown in Fig. 13, the pressed member 200 is inhibited from being pressed forward with the clutch 3 disconnected by the driver. Specifically, the pressed member 200 is inhibited from moving with the flange 202 of the pressed member 200 abutted against the inclined surface of the pressed member 301.

Therefore, in the present preferred embodiment, the output of the engine 107 is inhibited from being adjusted by the CPU 502 with the clutch 3 disconnected by the driver. In this case, the output of the engine 7 can be prevented from being adjusted by the CPU 502 with the clutch 3 disconnected. This can prevent an unexpected shock from being generated in the motorcycle 100 in the clutch connection. These results enable comfortable driving of the motorcycle 100.

Furthermore, with the pressed member 200 pressed forward by the driver (see Fig. 12), the pressed member 303 cannot be moved upward unless the driver operates the clutch lever 106b with a force exceeding a force with which the pressed member 200 is pressed. When the driver erroneously operates the clutch operation while the output of the engine 107 is adjusted by the CPU 502 (see Fig. 15), the clutch 3 (Fig. 2) is not disconnected unless the driver operates the clutch lever 106b with a sufficiently large force.

In this case, the driver is prevented from erroneously disconnecting the clutch 3 while the output of the engine 107 is adjusted by the CPU 502. This can prevent a shock that is not expected by the driver from being generated in the motorcycle 100 in the shift operation. Further, the driver can easily recognize that the output of the engine 107 is adjusted by the CPU 502. When the driver tries to erroneously operate the clutch lever 106b, therefore, the operation can be immediately interrupted. These results enable comfortable driving of the motorcycle 100.

Furthermore, with the clutch lever 106b operated by the driver (see Fig. 13), the pressed member 303 cannot be moved downward unless it is pressed with a force exceeding a force with which the clutch lever 106b is operated. When the driver tries to erroneously press the pressed member 200 during the clutch operation, therefore, the shift switch SW is not turned on unless the pressed member 200 is pressed with a sufficiently large force.

In this case, the driver is prevented from erroneously turning the shift switch SW on during the clutch operation, which can prevent a shock that is not expected by the driver from being generated in the motorcycle 100 in the clutch connection. The results enable comfortable driving of the motorcycle 100.

### Another Preferred Embodiment

Although in the above preferred embodiments, description was made of the motorcycle 100 as an example of a vehicle to which the engine output adjustment system is applied, the engine output adjustment system may be applied to other vehicles such as a three-wheeled vehicle and a four-wheeled vehicle.

### Example of Output Adjustment of Engine

The output adjustment of the engine 107 by the CPU 502 (see Fig. 15) in the ECU 50 (Fig. 1) will be described below.

### Relationship Between Engine Output and Transmission Gears

First, the relationship between the output of the engine 107 and the transmission gear will be described.

In general, when shifting the gears of the transmission 5 (hereinafter referred to as "the gearshift"), the driver operates a clutch lever (not shown) to disconnect the clutch 3 (Fig. 2). Thus, the transmission of the torque between the crank 2 (Fig. 2) and the main shaft 5a is stopped. The driver operates the shift pedal 11 in this state (hereinafter referred to as "the shift operation"). This enables the driver to smoothly operate the gearshift. The reason will be described with reference to the drawings.

As described above, the convex-shaped dogs are formed on the sliding gears of the plurality of transmission gears 5c, 5d, and the concave-shaped dog holes, with which the dogs are engaged are formed on the fixed gears of the plurality of transmission gears 5c, 5d.

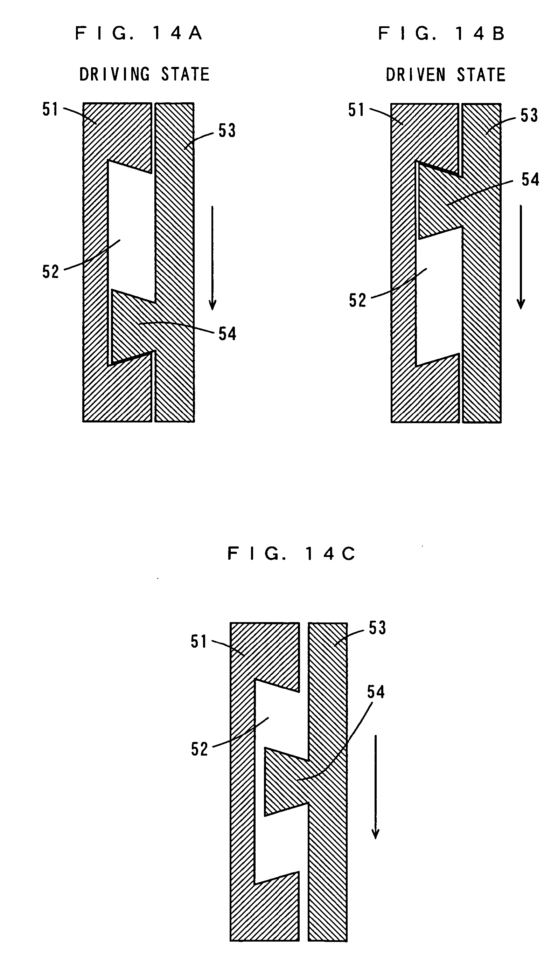

Figs. 14A to 14C are diagrams showing the relationship between a dog of a sliding gear and a dog hole of a fixed gear. Note that Figs. 14A to 14C schematically show sectional views of the portion in which the dog of the sliding gear and the dog hole of the fixed gear are formed. In addition, it is assumed that the portion of the sliding gear and the fixed gear shown in Figs. 14A and 14C will move (rotate) in the direction indicated by the arrow.

Fig. 14A shows a case in which the torque is applied from the crank 2 (Fig. 2) to the main shaft 5a (Fig. 2), and Fig. 14B shows a case in which the torque is applied from the main shaft 5a to the crank 2. Hereinafter, the case in which the torque is applied from the crank 2 to the main shaft 5a (the state of Fig. 14A) is referred to as a driving state of the engine 107, and the opposite case (the state of Fig. 14B) is referred to as a driven state of the engine 107. For example, the engine 107 is in the driving state when the motorcycle 100 is accelerated, and the engine 107 is in the driven state when the motorcycle 100 is decelerated. That is, the driven state of the engine 107 is a state in which an engine brake is applied.

As shown in Figs. 14A to 14C, the dog hole 52 having a trapezoidal shape in cross section with its width increasing toward the bottom surface is formed in the fixed gear 51. Moreover, the dog 54 having an inverted trapezoidal shape in cross section with its width increasing toward a tip portion thereof is formed on the sliding gear 53.

In the driving state of the engine 107, a front side surface of the dog 54 in the moving direction thereof abuts against a front side surface of the dog hole 52 in the moving direction thereof, as shown in Fig. 14A. Accordingly, the tuning force of the sliding gear 53 is transmitted to the fixed gear 51 through the dog 54. In this case, a large engaging force is generated in the contact surface of the dog hole 52 and the dog 54. Thus, it is difficult to move the sliding gear 53 in a direction away from the fixed gear 51.

Here, when the driver disconnects the clutch 3 (Fig. 2), the transmission of the torque from the crank 2 (Fig. 2) to the main shaft 5a (Fig. 2) is stopped. In this case, the main shaft 5a is rotated by inertia. Accordingly, the engagement of the dog hole 52 with the dog 54 is released as shown in Fig. 14C. This enables the sliding gear 53 to move in the direction away from the fixed gear 51, so that the gearshift can be smoothly performed.

Furthermore, in the driven state of the engine 107, a rear side surface of the dog 54 in the moving direction thereof abuts against a rear side surface of the dog hole 52 in the moving direction thereof, as shown in Fig. 14B. Accordingly, the torque of the fixed gear 51 is transmitted to the sliding gear 53 through the dog 54. As described above, since the engine brake is applied in the driven state of the engine 107, the rotation of the fixed gear 51 is restricted by the sliding gear 53. In this case, the large engaging force is generated in the contact surface of the dog hole 52 and the dog 54. Thus, it is difficult to move the sliding gear 53 in the direction away from the fixed gear 51.

Here, when the driver disconnects the clutch 3 (Fig. 2), the transmission of the torque between the crank 2 (Fig. 2) and the main shaft 5a (Fig. 2) is stopped. In this case, the engine brake is released, so that the main shaft 5a is rotated by inertia. Thus, the engagement between the dog hole 52 and the dog 54 is released as shown in Fig. 14C. This enables the sliding gear 53 to move in the direction away from the fixed gear 51, so that the gearshift can be performed smoothly.

Although a case where the convex-shaped dog is formed in the sliding gear and the concave-shaped dog hole is formed in the fixed gear was taken as an example, a concave-shaped dog hole and a dog may be respectively formed in the sliding gear and the fixed gear.

### Control of Engine Output

In the present preferred embodiment, the CPU 502 (Fig. 15) of the ECU 50 (Fig. 1) adjusts the output of the engine 107 based on the shift signal of the shift switch SW (Fig. 1) and the values detected by the above mentioned sensors SE1-SE6 (Fig. 1). Thus, the fixed gear 51 and the sliding gear 53 can be brought into the state shown in Fig. 14C without disconnecting the clutch 3 (Fig. 2). As a result, the driver can operate the gearshift smoothly without disconnecting the clutch 3. That is, the clutchless shifting can be performed smoothly. Details will now be described.

### Relationship Between Engine and Each Element

Fig. 15 is a diagram showing a schematic structure of each element related to the engine 107 and the control of the output of the engine 107.

As shown in Fig. 15, the engine 107 includes a cylinder 71, in which a piston 72 is arranged so as to be able to move up and down. In addition, a combustion chamber 73 is provided in the upper portion inside the cylinder 71. The combustion chamber 73 communicates with the outside of the engine 107 through an intake port 74 and an exhaust port 75.

An intake valve 76 capable of opening and closing is provided at a downstream open end 74a of the intake port 74, and an exhaust valve 77 capable of opening and closing is provided at an upstream open end 75a of the exhaust port 75. The intake valve 76 and the exhaust valve 77 are driven by a conventional cam mechanism. Above the combustion chamber 73, an ignition plug 78 is provided to perform a spark ignition in the combustion chamber 73.

The intake pipe 79 and the exhaust pipe 118 are attached to the engine 107 so as to communicate with the intake port 74 and the exhaust port 75, respectively. An injector 108 for supplying a fuel into the cylinder 71 is provided in the intake pipe 79. Inaddition, the electronically controlled throttle valve (ETV) 82 is provided in the intake pipe 79.

Upon actuation of the engine 107, air is taken from the intake port 74 into the combustion chamber 73 through the intake pipe 79 while the fuel is supplied into the combustion chamber 73 by the injector 108. Accordingly, a fuel-air mixture is produced in the combustion chamber 73, and the spark ignition is performed on the air-fuel mixture by the ignition plug 78. A burned gas produced by the combustion of the fuel-air mixture in the combustion chamber 73 is exhausted from the exhaust port 75 through the exhaust pipe 118.

The output signal of the shift switch SW and the values detected by the accelerator opening sensor SE1, the crank angle sensor SE2, the throttle sensor SE3, the shift cam rotation angle sensor SE4, the drive shaft rotation speed sensor SE5 and the load sensor SE6 are applied to the ECU 50.

### Control Operation of CPU

### Outline

In the present preferred embodiment, the CPU 502 of the ECU 50 (Fig. 15) adjusts a throttle opening of the ETV 82 based on the detected value of the accelerator opening sensor SE1 in a normal operation. Thus, the output of the engine 107 is adjusted to be a value depending on the accelerator opening. Note that the relationship between the accelerator opening and a throttle opening (the output of the engine) is stored in the ROM 503 or the RAM 504 of Fig. 15.

Moreover, the CPU 502 detects the shift operation performed by the driver based on the detected value of the load sensor SE6 when the shift switch SW is turned on. Then, when detecting the shift operation by the driver, the CPU 502 determines in which state the engine 107 is among the driving state, the driven state and a boundary state (the intermediate state between the driving state and the driven state), described later, based on the values detected by the crank angle sensor SE2 and the throttle sensor SE3. Based on this determination, the CPU 502 adjusts the output of the engine 107. In addition, the CPU 502 determines whether or not the gearshift is completed based on the value detected by the shift cam rotation angle sensor SE4 and finishes the output adjustment of the engine 107 if the gearshift is determined to be completed.

For example, when the up-shifting operation or the down-shifting operation is performed by the driver while the engine 107 is in the driving state, the output of the engine 107 is temporarily decreased by the CPU 502. Specifically, the output of the engine 107 is temporarily decreased by the CPU 502 so as to be less than the output of the engine 107 that is determined based on the accelerator opening at the time.

Alternatively, when the down-shifting operation is performed by the driver while the engine 107 is in the driven state, the output of the engine 107 is temporarily increased by the CPU 502. Specifically, the output of the engine 107 is temporarily increased by the CPU 502 so as to be greater than the output of the engine 107 that is determined based on the accelerator opening at the time. Note that the output adjustment of the engine 107 is not performed by the CPU 502 while the engine 107 is in the boundary state.

Note that the CPU 502 decreases the output of the engine 107 by, for example, stopping the spark ignition of the fuel-air mixture performed by the ignition plug 78 (Fig. 15), retarding an ignition timing, or decreasing a throttle opening of the ETV 82 (Fig. 15). Furthermore, the CPU 502 increases the output of the engine 107 by, for example, increasing the throttle opening of the ETV 82.

Details of the control operation of the CPU 502 will be described with reference to the drawings.
Determination Method of Driving State, Boundary State and Driven State

First, a determination method of the state of the engine 107 (the driving state, the boundary state and the driven state) is described. In the present preferred embodiment, the CPU 502 determines in which state the engine 107 is among the driving state, the boundary state and the driven state based on data that show the relationship between the rotation speed of the engine 107 (Fig. 15) with no load and the throttle opening of the ETV 82 (Fig. 15) (hereinafter referred to as "the driving state determination data").

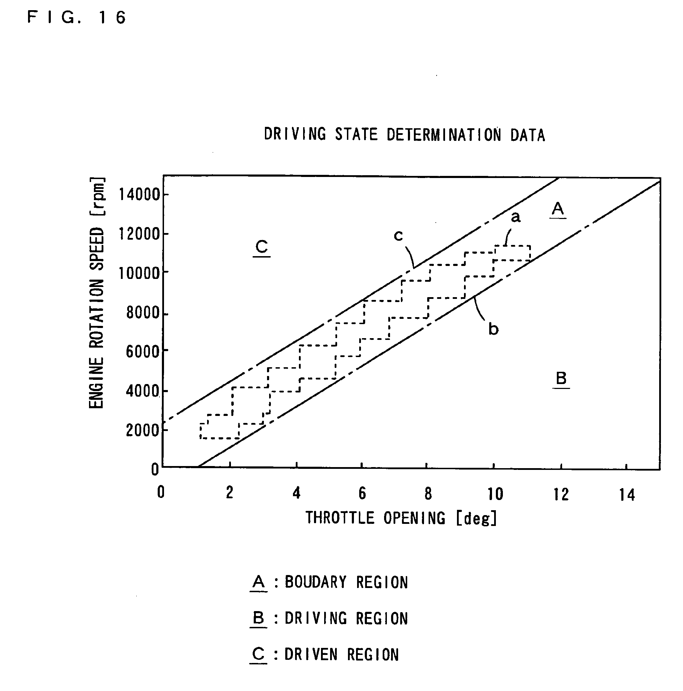

Fig. 16 is a diagram showing an example of the driving state determination data stored in the RAM 504 (ROM 503) of the ECU 50. In Fig. 16, the ordinate represents the rotation speed of the engine 107, and the abscissa represents the throttle opening of the ETV 82.

In Fig. 16, the dotted line a shows the relationship between the rotation speed of the engine 107 and the throttle opening when the transmission gears 5c, 5d (Fig. 2) are in the neutral positions. When the transmission gears 5c, 5d are in the neutral positions, the relationship between the rotation speed of the engine 107 and the throttle opening exhibits a hysteresis loop as shown in Fig. 16. Note that the relationship shown by the dotted line a can be derived from, for example, an experiment, a simulation using a computer or other suitable method.

In the present preferred embodiment, a strip-shaped region in between two parallel straight lines circumscribing the dotted line a (the region between the one-dot and dash line b and the one-dot and dash line c) is defined as a boundary region A while a region below the one-dot and dash line b is defined as a driving region B and a region above the one-dot and dash line c is defined as a driven region C.

In the determination of the state (the driving state, the boundary state and the driven state) of the engine 107, the CPU 502 calculates the rotation speed of the engine 107 based on the value detected by the crank angle sensor SE2. Then, the CPU 502 determines to which one of the above three regions the relationship between the engine 107 and the throttle opening belongs based on the calculated rotation speed and the detected value of the throttle sensor SE3. In this manner, the CPU 502 determines in which state the engine 107 is among the driving state, the boundary state and the driven state.

For example, the state where the rotation speed of the engine 107 is 6000 rpm and the throttle opening is 12 degrees belongs to the driving region B. In this case, the CPU 502 determines that the engine 107 is in the driving state.

Moreover, the state where the rotation speed of the engine 107 is 6000 rpm and the throttle opening is 2 degrees, for example, belongs to the driven region C. In this case, the CPU 502 determines that the engine 107 is in the driven state.

Furthermore, the state where the rotation speed of the engine 107 is 6000 rpm and the throttle opening is 6 degrees, for example, belongs to the boundary region A. In this case, the CPU 502 determines that the engine 107 is in the boundary state.

Note that the boundary state refers to the state of the engine 107 when the torque transmitted from the crank 2 (Fig. 2) to the main shaft 5a (Fig. 2) is equal to or less than a predetermined value, or when the torque transmitted from the main shaft 5a to the crank 2 is equal to or less than a predetermined value. That is, the torque is not substantially transmitted between the crank 2 and the main shaft 5a when the engine 107 is in the boundary state. In this case, the large pressure (engaging force) is not generated in the contact surface of the dog hole 52 (Fig. 14) and the dog 54 (Fig. 14). Therefore, the driver can easily move the sliding gear 53 in the direction away from the fixed gear 51 by operating the shift pedal 11 without disconnecting the clutch 3 (Fig. 2), even though the output of the engine 107 is not adjusted.

### Timing of Output Adjustment of Engine

Next, the timing of the output adjustment of the engine 107 by the CPU 502 is described with reference to the drawings.

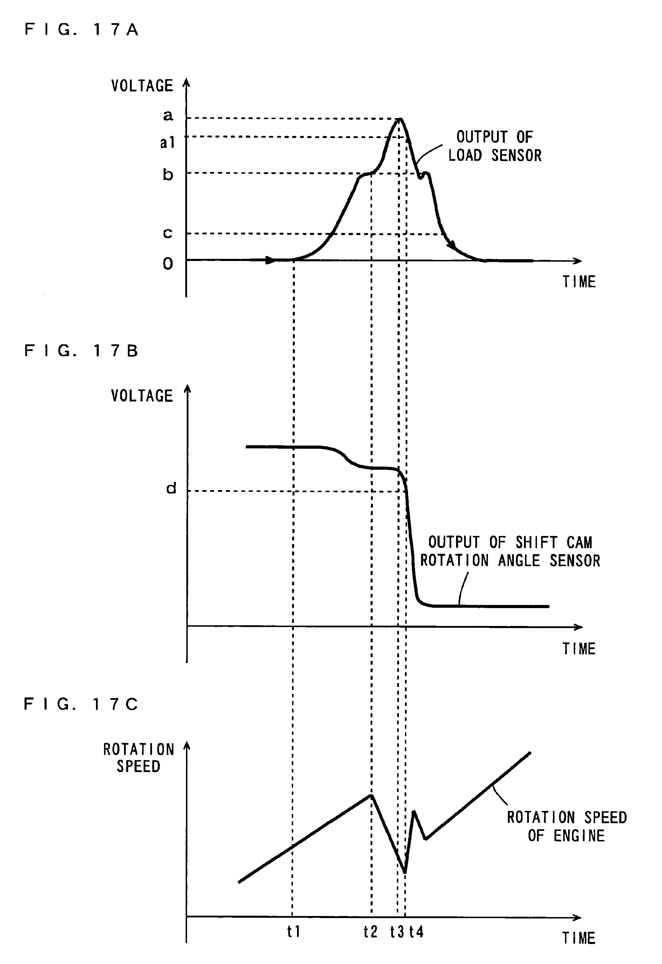

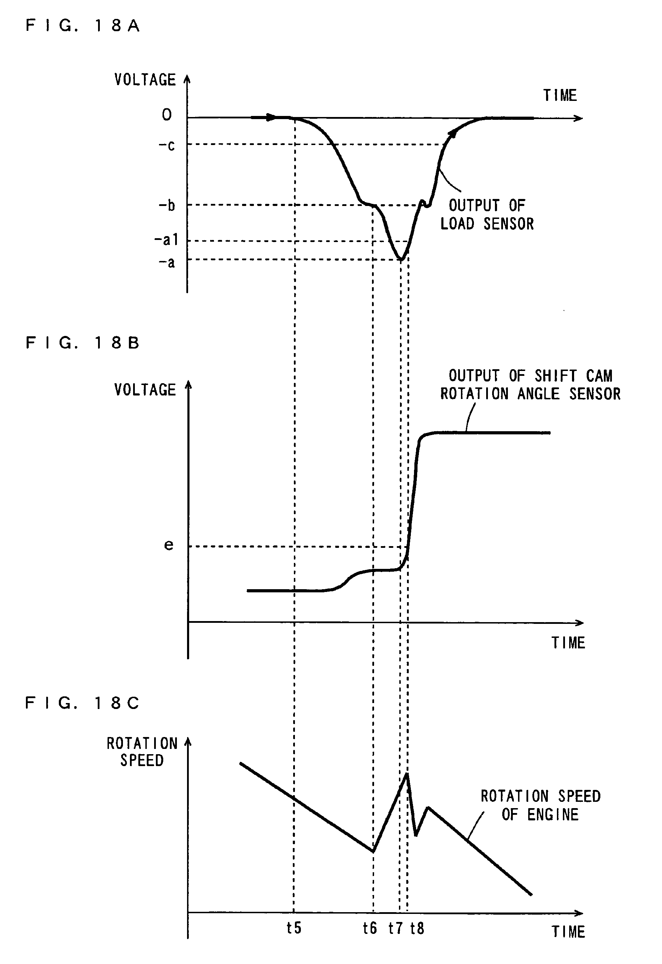

Figs. 17A to 17C are diagrams for describing the timing of the output adjustment of the engine 107 by the CPU 502 when the driver performs the up-shifting operation when the engine 107 is in the driving state. In addition, Figs. 18A to 18C are diagrams for use in describing the timing of the output adjustment of the engine 107 by the CPU 502 when the driver performs the down-shifting operation when the engine 107 is in the driven state.

Note that Fig. 17A and Fig. 18A show output waveforms (detected values) of the load sensor SE6, while Fig. 17B and Fig. 18B show output waveforms (detected values) of the shift cam rotation angle sensor SE4. In Figs. 17A and 17B and Figs. 18A and 18B, the ordinates represent voltage and the abscissas represent time. In addition, Fig. 17C and Fig. 18C show the rotation speed of the engine 107. In Fig. 17C and Fig. 18C, the ordinates represent the rotation speed, and the abscissas represent time.

First, Figs. 17A to 17C are described. As shown in Fig. 17C, the rotation speed of the engine 107 is increased as time passes when the engine 107 is in the driving state. In the example of Figs. 17A to 17C, the driver starts the up-shifting operation at a point t1 within the period where the rotation speed of the engine 107 is being increased.

The detected value (voltage value) of the load sensor SE6 is increased in accordance with the increase of the operation amount of the shift pedal 11 (Fig. 2) by the driver, as shown in Fig. 17A. Then, the detected value of the load sensor SE6 becomes a maximum value a, at a point t3 immediately before the engagement of the fixed gear 51 (Fig. 14) with the sliding gear 53 (Fig. 14) is released.

With the engagement of the fixed gear 51 with the sliding gear 53 being released, the driver lifts his/her foot off the shift pedal 11. Thus, the detected value of the load sensor SE6 drops from the maximum value a to zero, as shown in Fig. 17A.

As shown in Fig. 17B, the detected value (voltage value) of the shift cam rotation angle sensor SE4 gradually drops in accordance with the increase of the operation amount of the shift pedal 11 by the driver, and rapidly drops due to the release of the engagement of the fixed gear 51 with the sliding gear 53.

Note that deflections or play exist in each structural element of the transmission operating mechanism 111 (Fig. 2) and the shift mechanism 7 (Fig. 2). Therefore, the detected values of the load sensor SE6 and the shift cam rotation angle sensor SE4 unstably vary between the points t1 and t3.

Here, in the present preferred embodiment, the output adjustment of the engine 107 is started at a point t2 where the detected value (voltage value) of the load sensor SE6 reaches a value b, and the output of the engine 107 is subsequently reduced. Thus, the rotation speed of the engine 107 is decreased as shown in Fig. 17C, so that the pressure (engaging force) in the contact surface of the dog hole 52 (Figs. 14A to 14C) of the fixed gear 51 (Figs. 14A to 14C) and the dog 54 (Figs. 14A to 14C) of the sliding gear 53 (Figs. 14A to 14C) is reduced. As a result, the state of the fixed gear 51 and the sliding gear 53 is changed from the engaged state shown in Fig. 14A to the released state described in Fig. 14C. This enables the sliding gear 53 to easily move in the direction away from the fixed gear 51, so that the driver can operate the gearshift without disconnecting the clutch 3 (Fig. 2).

Note that there will be substantially no play in each structural element of the transmission operating mechanism 111 and the shift mechanism 7 when the detected value of the load sensor SE6 reaches the value b in the example of Fig. 17A. That is, the release operation of the dog hole 52 and the dog 54 is started when the detected value of the load sensor SE6 reaches the value b. Accordingly, the output adjustment of the engine 107 is started when the release operation of the dog hole 52 and the dog 54 is started in the present preferred embodiment.

Moreover, the output adjustment of the engine 107 is finished at a point t4 where the engagement of the fixed gear 51 with the sliding gear 53 is released and the detected value of the shift cam rotation angle sensor SE4 (Fig. 17B) becomes a value d, and the output of the engine 107 is subsequently increased again. This causes the rotation speed of the engine 107 to increase again, as shown in Fig. 17C. As a result, the fixed gear 51 and the sliding gear 53 are engaged with each other (the engaged state of Fig. 14A), so that the gearshift is completed.

Note that since the engagement of the fixed gear 51 with the sliding gear 53 is released at the point t4, the detected value of the load sensor SE6 becomes a value al that is slightly lower than the maximum value a, as shown in Fig. 17A.

Next, Figs. 18A to 18C are described. As shown in Fig. 18C, the rotation speed of the engine 107 is decreased as time passes when the engine 107 is in the driven state. In the example of Figs. 18A to 18C, the driver starts the down-shifting operation at a point t5 within the period where the rotation speed of the engine 107 is being decreased.

As shown in Fig. 18A, the detected value of the load sensor SE6 is decreased in accordance with the increase of the operation amount of the shift pedal 11 (Fig. 2) by the driver. Then, the detected value of the load sensor SE6 becomes a minimum value -a, at a point t7 immediately before the engagement of the fixed gear 51 (Figs. 14A to 14C) with the sliding gear 53 (Figs. 14A to 14C) is released.

With the engagement of the fixed gear 51 with the sliding gear 53 being released, the driver lifts his/her foot off the shift pedal 11. Accordingly, the detected value of the load sensor SE6 is increased from the minimum value -a to zero, as shown in Fig. 18A.

The detected value (voltage value) of the shift cam rotation angle sensor SE4 is gradually increased in accordance with the increase of the operation amount of the shift pedal 11 by the driver, and is rapidly increased due to the release of the engagement of the fixed gear 51 with the sliding gear 53, as shown in Fig. 18B.

Here, in the present preferred embodiment, the output adjustment of the engine 107 is started at a point t6 where the detected value (voltage value) of the load sensor SE6 reaches a value -b, and the output of the engine 107 is subsequently increased. Thus, as shown in Fig. 18C, the rotation speed of the engine 107 is increased, and the pressure (engaging force) in the contact surface of the dog hole 52 (Figs. 14A to 14C) of the fixed gear 51 (Figs. 14A to 14C) and the dog 54 (Figs. 14A to 14C) of the sliding gear 53 (Figs. 14A to 14C) is reduced. As a result, the state of the fixed gear 51 and the sliding gear 53 is changed from the engaged state shown in Fig. 14B to the released state described in Fig. 14C. This enables the sliding gear 53 to easily move in the direction away from the fixed gear 51, whereby the driver can operate the gearshift without disconnecting the clutch 3 (Fig. 2).

Note that there will be substantially no play in each structural element of the transmission operating mechanism 111 and the shift mechanism 7 when the detected value of the load sensor SE6 reaches the value -b, in the example of Fig. 18A. That is, the release operation of the dog hole 52 and the dog 54 is started when the detected value of the load sensor SE6 reaches the value -b. Thus, the output adjustment of the engine 107 is started when the release operation of the dog hole 52 and the dog 54 is started in the present preferred embodiment.

Furthermore, the output adjustment of the engine 107 is finished at a point t8 where the engagement of the fixed gear 51 with the sliding gear 53 is released and the detected value of the shift cam rotation sensor SE4 (Fig. 18B) reaches a value e, and the output of the engine 107 is subsequently decreased again. This causes the rotation speed of the engine 107 to decrease again, as shown in Fig. 18C. As a result, the fixed gear 51 and the sliding gear 53 are again in the engaged state (the engaged state of Fig. 14B), so that the gearshift is completed.

Note that since the engagement of the fixed gear 51 with the sliding gear 53 is released at the point t8, the detected value of the load sensor SE6 becomes a value -al that is slightly higher than the minimum value -a, as shown in Fig. 18A.

As described above, the output adjustment of the engine 107 is started when an absolute value of the detected value (voltage value) of the load sensor SE6 becomes at least the value b in the present preferred embodiment. In addition, the output adjustment of the engine 107 is finished when the detected value of the shift cam rotation angle sensor SE4 becomes equal to or less than the value d in the up-shifting operation. In the down-shifting operation, the output adjustment of the engine 107 is finished when the detected value of the shift cam rotation angle sensor SE4 becomes at least the value e. Furthermore, the CPU 502 determines that the gearshift is completed when the absolute value of the detected value of the load sensor SE6 becomes equal to or less than the value c that is smaller than the value b.

### Control Flow

Next, details of the control operation of the CPU 502 are described.

Note that the absolute value of the detected value of the load sensor SE6 when the output adjustment of the engine 107 is started is referred to as a first threshold value in the following description. In addition, the detected value of the shift cam rotation angle sensor SE4 when the output adjustment of the engine 107 is finished in the up-shifting operation is referred to as a second threshold value. Moreover, the detected value of the shift cam rotation angle sensor SE4 when the output adjustment of the engine 107 is finished in the down-shifting operation is referred to as a third threshold value. Furthermore, the absolute value of the detected value of the load sensor SE6 in which the gearshift is determined to be completed is referred to as a fourth threshold value. In the examples of Figs. 17A to 17C and Figs. 18A to 18C, the values b, d, e, and c correspond to the first, second, third, and fourth threshold values, respectively.

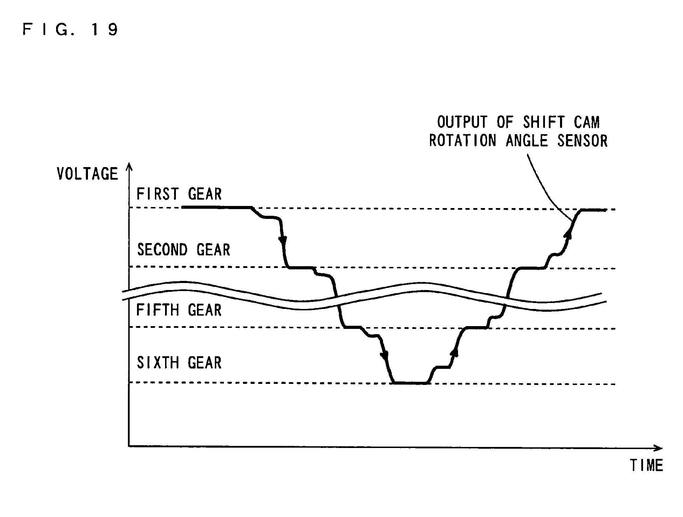

Note that the detected value of the shift cam rotation angle sensor SE4 varies depending on the gear positions. Fig. 19 is a diagram showing an example of the detected value (voltage value) of the shift cam rotation angle sensor SE4 when the gear positions are changed between the first gear and the sixth gear. Note that the ordinate represents voltage and the abscissa represents time in Fig. 19.

As shown in Fig. 19, the detected value of the shift cam rotation angle sensor SE4 is high when the gears are in low speed positions, and becomes smaller as the gears move to higher speed positions. Thus, the second and third threshold values vary depending on the gear positions.

Note that the first to fourth threshold values and the fifth and sixth threshold values, described later, are stored in the RAM 504 of the ECU 50 (Fig. 15).

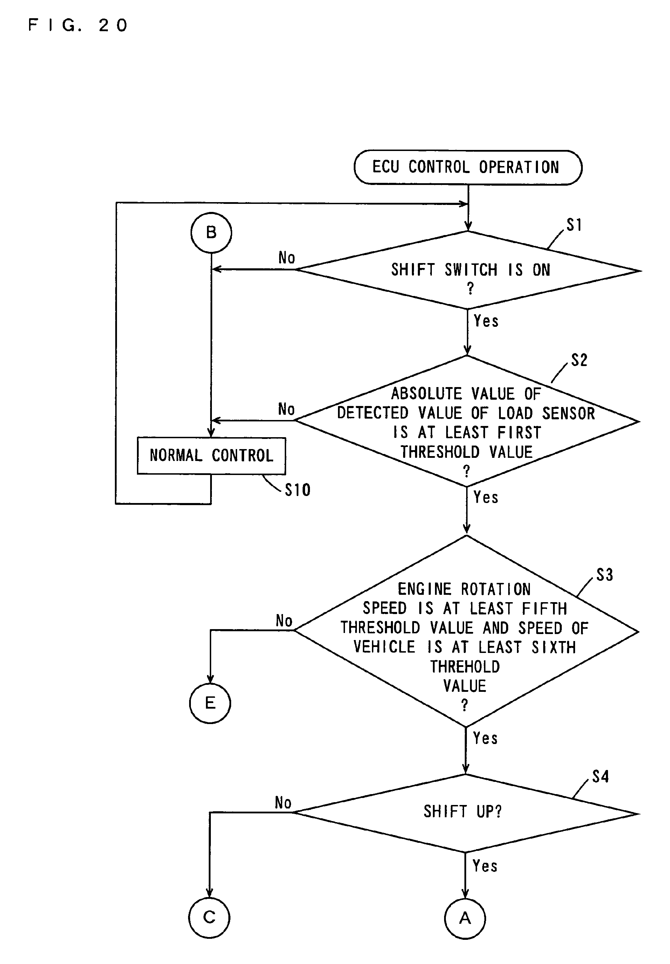

Figs. 20 to 22 are flowcharts that show an example of the control operation of the CPU 502.

As shown in Fig. 20, the CPU 502 first determines whether or not the shift switch SW (Fig. 1) is turned on (step S1) . When the shift switch SW is turned on, the CPU 502 determines whether or not the absolute value of the detected value of the load sensor SE6 is not less than the first threshold value (corresponding to the value b of Figs. 17A and 18A) (step S2). Note that in the step S2, the CPU 502 may determine whether or not the absolute value of the detected value of the load sensor SE6 exceeds the first threshold value for a predetermined period or longer, since the detected value of the load sensor SE6 includes noises in some cases.

When the absolute value of the detected value of the load sensor SE6 is at least the first threshold value, the CPU 502 determines whether or not the rotation speed of the engine 107 is at least the fifth threshold value (approximately 1500 rpm, for example) and the speed of a vehicle body is at least the sixth threshold value (approximately 15 km/h, for example) (step S3). Note that the speed of the vehicle body of the motorcycle 100 is calculated by the CPU 502 based on the detected value of the drive shaft rotation speed sensor SE5. Effects of providing the process of the step S3 will be described later.

When the rotation speed of the engine 107 is at least the fifth threshold value and the speed of the vehicle body is at least the sixth threshold value, the CPU 502 determines whether or not the up-shifting operation is performed by the driver (step S4). Note that the CPU 502 determines that the up-shifting operation is performed when the detected value of the load sensor SE6 is a positive value, and determines that the down-shifting operation is performed when the detected value of the load sensor SE6 is a negative value.

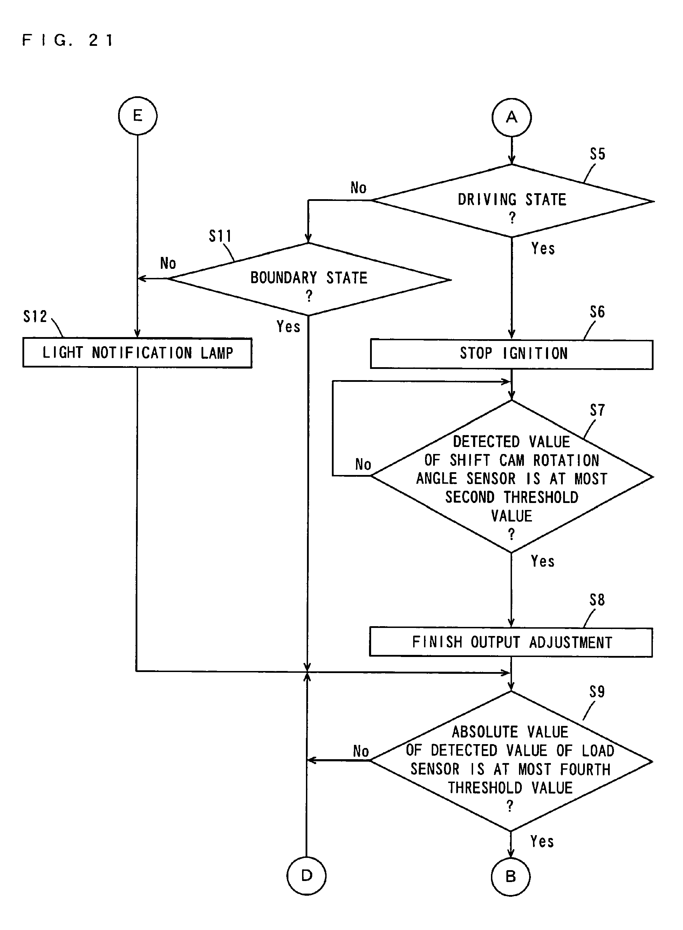

When the up-shifting operation is performed by the driver, the CPU 502 determines whether or not the engine 107 is in the driving state (step S5) as shown in Fig. 21. The CPU 502 decreases the output of the engine 107 by stopping the ignition of the fuel-air mixture by an ignition plug 78 when the engine 107 is in the driving state (step S6). As described above, the output of the engine 107 is decreased in a process of the step S6, so that the sliding gear 53 can be easily moved in the direction away from the fixed gear 51.

Next, the CPU 502 determines whether or not the detected value of the shift cam rotation angle sensor SE4 is equal to or less than the second threshold value (corresponding to the value d of Fig. 17B) (step S7). Note that the CPU 502 may determine whether or not the detected value of the shift cam rotation angle sensor SE4 is less than the second threshold value for a predetermined period or longer in the step S7, since the detected value of the shift cam rotation angle sensor SE4 includes noises in some cases.

The CPU 502 determines that the engagement of the fixed gear 51 (Figs. 14A to 14C) with the sliding gear 53 (Figs. 14A to 14C) is released, and then finishes the output adjustment of the engine 107 started in the step S6 when the detected value of the shift cam rotation angle sensor SE4 is equal to or less than the second threshold value (step S8).

Next, the CPU 502 determines whether or not the absolute value of the detected value of the load sensor SE6 is equal to or less than the fourth threshold value (step S9). Note that the CPU 502 may determine whether or not the absolute value of the detected value of the load sensor SE6 is smaller than the fourth threshold value for a predetermined period or longer in the step S9, since the detected value of the load sensor SE6 includes noises in some cases.

When the absolute value of the detected value of the load sensor SE6 is equal to or less than the fourth threshold value, the CPU 502 determines that the gearshift is completed, and performs a normal control as shown in Fig. 20 (step S10). In the normal control of the step S10, the CPU 502 adjusts the throttle opening of the ETV 82 based on the detected value of the accelerator opening sensor SE1. Thus, the output of the engine 107 is adjusted depending on the operation amount of the accelerator grip 106 by the driver in the normal control.

When the engine 107 is not in the driving state in the step S5 of Fig. 21, the CPU 502 determines whether or not the engine 107 is in the boundary state (step S11).

When the engine 107 is in the boundary state, the CPU 502 proceeds to the step S9 without adjusting the output of the engine 107. Note that the engaging force of the sliding gear 53 (Figs. 14A to 14C) with the fixed gear 51 (Figs. 14A to 14C) is not very large in the boundary state as described above. This enables the driver to easily move the sliding gear 53 in the direction away from the fixed gear 51 without the output adjustment of the engine 107.

When the engine 107 is not in the boundary state, that is, when the engine 107 is in the driven state in the step S11, the CPU 502 lights the notification lamp 60 (Fig. 1) without adjusting the output of the engine 107 (step S12).

Note that the fixed gear 51 (Figs. 14A to 14C) and the sliding gear 53 (Figs. 14A to 14C) are maintained in the engaged state shown in Fig. 14A, since the output of the engine 107 is not adjusted in this case. Thus, it is difficult to release the engagement of the fixed gear 51 with the sliding gear 53. In this manner, it becomes difficult to operate the gearshift because of the control by the CPU 502 when the engine 107 is in the driven state in the step S11. This prevents the transmission 5 from being shifted up during deceleration. As a result, a rapid increase in the speed of the motorcycle 100 is prevented during deceleration, so that the drivability of the motorcycle 100 is improved.

Moreover, lighting of the notification lamp 60 enables the driver to easily recognize that it is difficult to operate the gearshift because of the control by the CPU. This enables the driver to quickly stop the shift operation. The results prevent the driving feeling of the motorcycle 100 from being deteriorated.

The CPU 502 proceeds to the step S9 after lighting the notification lamp 60 in the step S12.

When the detected value of the shift cam rotation angle sensor SE4 is greater than the second threshold value in the step S7, the CPU 502 waits until the detected value of the shift cam rotation angle sensor SE4 becomes equal to or less than the second threshold value. That is, the CPU 502 continues the output adjustment of the engine 107 until the engagement of the fixed gear 51 with the sliding gear 53 is released.

When the absolute value of the detected value of the load sensor SE6 is greater than the fourth threshold value in the step S9, the CPU 502 waits until the absolute value of the detected value of the load sensor SE6 becomes equal to or less than the fourth threshold value.

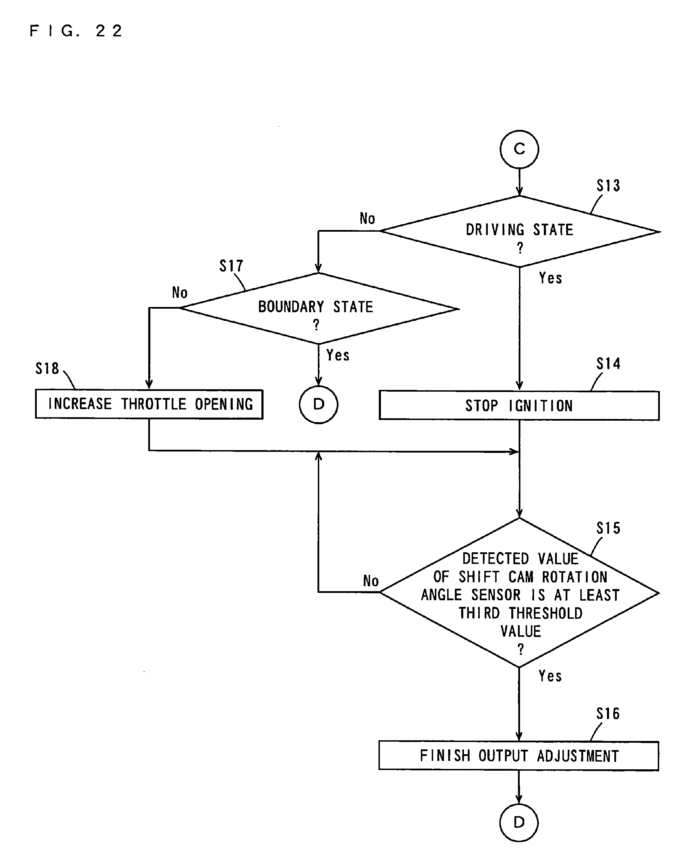

When the up-shifting operation is not performed by the driver in the step S4 of Fig. 20, that is, when the down-shifting operation is performed by the driver, the CPU 502 determines whether or not the engine 107 is in the driving state as shown in Fig. 22 (step S13). When the engine 107 is in the driving state, the CPU 502 decreases the output of the engine 107 by stopping the ignition of the fuel-air mixture by the ignition plug 78 (step S14). The output of the engine 107 is decreased in the process of this step S14, so that the sliding gear 53 can be easily moved in the direction away from the fixed gear 51 as described above.

Next, the CPU 502 determines whether or not the detected value of the shift cam rotation angle sensor SE4 is at least the third threshold value (corresponding to the value e of Fig. 18B) (step S15). Note that the CPU 502 may determine whether or not the detected value of the shift cam rotation angle sensor SE4 exceeds the third threshold value for a predetermined period or longer in the step S15, since the detected value of the shift cam rotation angle sensor E4 includes noises in some cases.

When the detected value of the shift cam rotation angle sensor SE4 is at least the third threshold value, the CPU 502 determines that the engagement of the fixed gear 51 (Figs. 14A to 14C) with the sliding gear 53 (Figs. 14A to 14C) is released, and then finishes the output adjustment of the engine 107 started in the step S14 or a step S18, described later (step S16). Then, the CPU 502 proceeds to the step S9 of Fig. 21.

When the engine 107 is not in the driving state in the step S13 of Fig. 22, the CPU 502 determines whether or not the engine 107 is in the boundary state (step S17).

When the engine 107 is in the boundary state, the CPU 502 proceeds to the step S9 of Fig. 21 without adjusting the output of the engine 107. Note that the driver can easily move the sliding gear 53 (Figs. 14A to 14C) in the direction away from the fixed gear 51 (Figs. 14A to 14C) without the output adjustment of the engine 107 in the boundary state, as described above.

When the engine 107 is not in the boundary state in the step S17 of Fig. 22, that is, when the engine 107 is in the driven state, the CPU 502 increases the throttle opening of the ETV 82 and increases the output of the engine 107 (the step S18). The output of the engine 107 is increased in the process of this step S18, so that the sliding gear 53 can be easily moved in the direction away from the fixed gear 51 as described above. Then, the CPU 502 proceeds to the step S15.

When the detected value of the shift cam rotation angle sensor SE4 is less than the third threshold value in the step S15, the CPU 502 waits until the detected value of the shift cam rotation angle sensor SE4 becomes at least the third threshold value. That is, the CPU 502 continues the output adjustment of the engine 107 until the engagement of the fixed gear 51 with the sliding gear 53 is released.

When the shift switch SW (Fig. 1) is turned off in the step S1 of Fig. 20, the CPU 502 determines that the driver does not permit the output adjustment of the engine 107, and then proceeds to the step S10 to perform normal control.

When the absolute value of the detected value of the load sensor SE6 is less than the first threshold value in the step S2, the CPU 502 determines that the shift operation is not started by the driver, and then proceeds to the step S10 to perform the normal control.

In addition, when the rotation speed of the engine 107 is less than the fifth threshold value or the speed of the vehicle body is less than the sixth threshold value in the step S3, the CPU 502 proceeds to the step S12 of Fig. 21 and lights the notification lamp 60 (Fig. 1) without controlling the output of the engine 107.

Note that since the output of the engine 107 is not adjusted in this case, a rapid change in the output of the engine 107 is prevented during low speed driving. This prevents the rear wheel 115 (Fig. 1) from slipping and prevents the driving feeling of the motorcycle 100 from being negatively impacted.

Furthermore, in this case, the fixed gear 51 (Figs. 14A to 14C) and the sliding gear 53 (Figs. 14A to 14C) are maintained in the engaged state shown in Fig. 14A. Thus, the gearshift is prevented since it is difficult to release the engagement of the fixed gear 51 with the sliding gear 53. Accordingly, a rapid change in the speed of the motorcycle 100 is prevented during low speed driving, and the drivability of the motorcycle 100 is improved.

Moreover, lighting of the notification lamp 60 enables the driver to easily recognize that it is difficult to operate the gearshift because of the control by the CPU 502. This enables the driver to stop the shift operation quickly. The results prevent the driving feeling of the motorcycle 100 from being deteriorated. Effects

As described above, the output of the engine 107 is decreased by the CPU 502 when the engine 107 is in the driving state when the driver performs the up-shifting operation or the down-shifting operation in the present preferred embodiment. In addition, the output of the engine 107 is increased by the CPU 502 when the engine 107 is in the driven state when the driver performs the down-shifting operation. Accordingly, the pressure (engaging force) generated in the contact surface of the fixed gear 51 and the sliding gear 53 is reduced, so that the driver can perform the clutchless shifting smoothly.

The control by the CPU 502 makes it difficult to operate the gearshift when the engine 107 is in the driven state when the up-shifting operation is performed by the driver. This can prevent the transmission 5 from being shifted up during the deceleration of the motorcycle 100. The results prevent the rapid increase in the speed of the motorcycle 100 during the deceleration, and prevent the driving feeling of the motorcycle 100 from being negatively impacted.

When it is difficult to operate the gearshift, the notification lamp 60 is lit by the CPU 502. In this case, the driver can easily recognize that the CPU 502 makes it difficult to operate the gearshift. Thus, the driver can quickly stop the shift operation. As a result, the drivability of the motorcycle 100 is further improved. In addition, the driver can easily determine whether or not a failure is occurring in the motorcycle 100 by confirming the state of the notification lamp 60, even if the clutchless shifting cannot be performed.

The foregoing results enable the driver to enjoy comfortably driving the motorcycle 100.

When the motorcycle 100 is driven at a low speed, the control by the CPU 502 makes it difficult to operate the gearshift. Accordingly, the rapid change in the speed of the motorcycle 100 is prevented during low speed driving. This prevents the rear wheel 115 from slipping, and prevents the driving feeling of the motorcycle 100 from being deteriorated. Also in this case, the driver can quickly interrupt the shift operation and can easily determine whether or not a failure is occurring in the motorcycle 100 by confirming the state of the notification lamp 60.

The CPU 502 performs the normal control when the engine 107 is in the boundary state when the driver performs the up-shifting operation or the down-shifting operation. That is, the output of the engine 107 is not adjusted when the torque having at least a predetermined value is not transmitted between the engine 107 (the crank 2) and the transmission 5 (the main shaft 5a).

Here, as described above, the large pressure (engaging force) is not generated in the contact surface of the fixed gear 51 and the sliding gear 53 when the torque transmitted between the engine 107 and the transmission 5 is small. Thus, the driver can perform the clutchless shifting easily even though the output of the engine 107 is not adjusted. In this case, a shock generated by the adjustment of the output of the engine 107 can be prevented, which prevents the driving feeling of the motor cycle 100 from being negatively impacted. This enables the driver to enjoy comfortably driving the motorcycle 100.

Providing the boundary state can prevent the output control of the engine 107 that should be performed in the driven state from being performed in the driving state, and prevent the output control of the engine 107 that should be performed in the driving state from being performed in the driven state. This can avoid the output of the engine 107 from being adjusted improperly even if the determination as to whether the engine 107 is in the driving state or the driven sate cannot be properly made because the engine 107 is in the vicinity of the boundary between the driving state and the driven state. This enables the clutchless shifting to be smoothly performed, and prevents the driving feeling of the motorcycle 100 from being deteriorated.

Note that an appropriate period of time for the output adjustment sometimes cannot be ensured when the adjustment of the output of the engine 107 is finished based on the rotation speed of the engine 107, the elapsed time after the shift operation or the like. Thus, the clutchless shifting cannot be performed smoothly in some cases.

In contrast, the adjustment of the output of the engine 107 is determined to be finished based on the detected value of the shift cam rotation angle sensor SE4 in the present preferred embodiment. Accordingly, the adjustment of the output of the engine 107 can be finished at the most appropriate timing regardless of the operation amount and the operation speed of the shift pedal 11 by the driver. This enables the clutchless shifting to be performed more quickly, and easily makes the output of the engine 107 stable.

In addition, the ignition of the fuel-air mixture by the ignition plug 78 is stopped, so that the output of the engine 107 is decreased in the present preferred embodiment. In this case, the output of the engine 107 can be rapidly decreased. This enables the clutchless shifting to be performed quickly.

Furthermore, the state (the driving state, the boundary state and the driven state) of the engine 107 is determined based on the driving state determination data stored in the RAM 504 (ROM 503) in the present preferred embodiment. In this case, a sensor for detecting the transmission state of the torque is not required, so that a production cost of the motorcycle 100 can be reduced.

### Another Example of Output Adjustment of Engine

While the output of the engine 107 is decreased by stopping the ignition of the fuel-air mixture by the ignition plug 78 in the step S6 of Fig. 21 and the step S14 of Fig. 22 in the above described preferred embodiment, the output of the engine 107 may be decreased by retarding the ignition timing. In addition, the output of the engine 107 may be decreased by controlling the ETV 82.

Moreover, while the adjustment of the output of the engine 107 is finished immediately after the engagement of the fixed gear 51 with the sliding gear 53 is released (at the point t4 in Fig. 17 and the point t8 in Fig. 18) in the above described preferred embodiment, the adjustment of the output of the engine 107 may be finished at other timings. For example, the adjustment of the output of the engine 107 may be finished in the vicinity of a point of time where the sliding gear 53 moves to engage with another fixed gear 51. In this case, the second threshold value (the value d of Fig. 17B) is decreased, and the third threshold value (the value e of Fig. 18B) is increased.

Furthermore, while the state (the driving state, the boundary state and the driven sate) of the engine 107 is determined based on the driving state determination data in the above described preferred embodiment, the state (the driving state, the boundary state and the driven sate) of the engine 107 may be determined by other methods.

For example, a three-dimensional map that shows the relationships among the rotation speed of the engine 107, the throttle opening of the ETV 82 and the torque (driving force) generated by the engine 107 may be stored in the RAM 504 (ROM 503) in the ECU 50. In this case, the torque generated by the engine 107 can be derived from the three-dimensional map based on the rotation speed of the engine 107 and the throttle opening of the ETV 82. Then, it may be determined that the engine 107 is in the driving state when the derived torque is a positive value of at least a predetermined value, that it is in the boundary state when the absolute value of the derived torque is less than the predetermined value, and that it is in the driven state when the absolute value of the derived torque is a negative value of at least the predetermined value.

In the following two paragraphs, non-limiting examples of correspondences between various elements recited in the claims below and those described above with respect to various preferred embodiments of the present invention are explained.

In the preferred embodiments described above, the CPU 502 is an example of an engine output adjuster, the shift switch SW and the clutch lever 106b are examples of an inhibiting mechanism, the clutch lever 106b is an example of a clutch operating member, the shift switch SW is an example of a switch mechanism, the moving member 90 is an example of a first moving portion, the wide portion 62 is an example of a second moving portion or a fourth moving portion, the pressed member 200 is an example of a third moving portion, and the rear wheel 115 is an example of a drive wheel.

As the elements recited in the claims, various other elements having the structure or function recited in the claims may be used and included.

While preferred embodiments of the present invention have been described above, it is to be understood that variations and modifications will be apparent to those skilled in the art without departing the scope and spirit of the present invention. The scope of the present invention, therefore, is to be determined solely by the following claims.

## Claims

1. An engine output adjustment system that adjusts an output of an engine in a vehicle that transmits a torque generated by the engine to a drive wheel through a clutch and a transmission, the engine output adjustment system comprising:
an engine output adjuster arranged to adjust the output of the engine when a driver performs a shift operation of the transmission; and
an inhibiting mechanism arranged to inhibit the clutch from being disconnected by the driver when the output of the engine is being adjusted by the engine output adjuster.

2. The engine output adjustment system according to claim 1, wherein the inhibiting mechanism inhibits the output of the engine from being adjusted by the engine output adjuster when the driver disconnects the clutch.

3. The engine output adjustment system according to claim 1, wherein the inhibiting mechanism either enables the engine output adjuster to adjust the output of the engine or enables the driver to disconnect the clutch.

4. The engine output adjustment system according to claim 1, further comprising a switch mechanism operated by the driver, wherein the engine output adjuster adjusts the output of the engine when the switch mechanism is operated and the shift operation of the transmission is performed.

5. The engine output adjustment system according to claim 4, further comprising a clutch operating member operated by the driver so as to operate the clutch, wherein the inhibiting mechanism inhibits the clutch operating member from being operated by the driver when the driver operates the switch mechanism.

6. The engine output adjustment system according to claim 5, wherein the inhibiting mechanism inhibits the switch mechanism from being operated by the driver when the driver operates the clutch operating member.

7. The engine output adjustment system according to claim 5, wherein the inhibiting mechanism includes the switch mechanism and the clutch operating member, the switch mechanism includes a first moving portion that moves in synchronization with the operation by the driver, the clutch operating member includes a second moving portion that moves in synchronization with the operation by the driver, the first moving portion moves to a position where the second moving portion is inhibited from moving when the driver operates the switch mechanism, and the second moving portion moves to a position where the first moving portion is inhibited from moving when the driver operates the clutch operating member.

8. The engine output adjustment system according to claim 5, wherein the inhibiting mechanism includes the switch mechanism and the clutch operating member, the switch mechanism includes a third moving portion that moves in a first direction in synchronization with the operation by the driver, the clutch operating member includes a fourth moving portion that moves in a second direction in synchronization with the operation by the driver, the third moving portion urges the fourth moving portion in a direction opposite to the second direction when the driver operates the switch mechanism, and the fourth moving portion urges the third moving portion in a direction opposite to the first direction when the driver operates the clutch operating member.

9. The engine output adjustment system according to claim 1, wherein when the driver performs the shift operation of the transmission, the engine output adjuster decreases the output of the engine when the torque is at least a first value in a driving state where the torque is transmitted from the engine to the transmission and does not decrease the output when the torque is less than the first value in the driving state.

10. A vehicle comprising:
a drive wheel;
an engine arranged to generate a torque for rotating the drive wheel;
a transmission arranged to transmit the torque generated by the engine to the drive wheel;
a clutch provided between the engine and the transmission;
an engine output adjuster arranged to adjust the output of the engine when a driver performs a shift operation of the transmission; and
an inhibiting mechanism arranged to inhibit the clutch from being disconnected by the driver when the output of the engine is adjusted by the engine output adjuster.
